# EUROPÄISCHE PATENTSCHRIFT

(11) **EP 3 516 284 B1**
(45) Veröffentlichungstag und Bekanntmachung des Hinweises auf die Patenterteilung: **10.11.2021**
(21) Anmeldenummer: 17772385.5
(22) Anmeldetag: 21.09.2017
(51) Int. Cl.: F16L 37/098, F16L 31/02, F16L 33/00, F16L 37/14, F16L 41/02

(54) **STECKVERBINDERANORDNUNG FÜR MEDIENLEITUNGEN SOWIE VERFAHREN ZUM VERBINDEN VON MEDIENLEITUNGEN**
CONNECTOR ARRANGEMENT FOR MEDIA PIPELINES AND METHOD FOR CONNECTING MEDIA PIPELINES
ENSEMBLE CONNECTEUR ENFICHABLE POUR CONDUITES DE FLUIDE AINSI QUE PROCÉDÉ PERMETTANT DE RELIER DES CONDUITES DE FLUIDE

(30) Priorität: 21.09.2016 DE 102016117830
(43) Veröffentlichungstag der Anmeldung: 31.07.2019
(73) Patentinhaber: Voss Automotive GmbH, 51688 Wipperfürth (DE)
(72) Erfinder: ZWILLUS, Christian, 51702 Bergneustadt (DE); BROMBACH, Michael, 51789 Lindlar (DE); KLEHR, Adrian, 58809 Neuenrade (DE); MITTERER, Reiner, 51688 Wipperfürth (DE)
(74) Vertreter: Dr. Solf & Zapf Patent- und Rechtsanwalts PartG mbB
(86) Internationale Anmeldenummer: PCT/EP2017/073941
(87) Internationale Veröffentlichungsnummer: WO 2018/055052

(56) Entgegenhaltungen:
- EP-A2- 1 726 865
- EP-A2- 2 407 698
- WO-A1-2009/076687
- CA-A- 695 250
- DE-A1- 4 010 234
- DE-A1-102004 052 475
- DE-A1-102008 018 426
- DE-A1-102009 036 463
- DE-U1- 8 519 902
- GB-A- 604 573

## Beschreibung

Die Erfindung betrifft eine Steckverbinderanordnung für Medienleitungen gemäß dem Oberbegriff des Anspruchs 1, aufweisend mindestens einen Anschlusskörper und mindestens ein Ansatzbauteil, wobei der Anschlusskörper mindestens eine Aufnahmeöffnung zur zumindest teilweisen Aufnahme des Ansatzbauteils und einen Fluidkanal aufweist. Ferner betrifft die Erfindung ein Verfahren zum Verbinden von Medienleitungen.

Unter der Bezeichnung "Medienleitung" sind grundsätzlich Leitungsverbindungen für beliebige Strömungs- und/oder Druckmedien, wie Gase und Flüssigkeiten, zu verstehen. Medienleitungen sind grundsätzlich Rohr- oder Schlauchleitungen sowie deren Anschluss- und Verbindungselemente, die Teil eines Systems zur Führung eines Mediums sind.

Im Stand der Technik sind eine Vielzahl von Steckverbinderanordnungen für Medienleitungen sowie Verfahren zum Verbinden von Medienleitungen bekannt. Besonders häufig kommen dabei lösbare Verbindungen, insbesondere Schraubverbindungen, zum Einsatz, bei denen zum Verbinden von zwei Segmenten einer Medienleitung ein dichtendes Verspannen, beispielsweise mittels einer Überwurfmutter und einem korrespondierenden Gewinde, erfolgt.

WO 2009/076687 A1 offenbart eine Muffe zum Verbinden von zumindest zwei Rohren. Die Muffe umfasst eine Arretierhülse, die eine formschlüssige Verbindung sowohl mit einem weiblichen Muffenteil als auch mit einem männlichen Muffenteil eingeht, indem sie jeweils mit einem Vorsprung verrastet. Für die formschlüssige Verbindung mit dem männlichen Muffenteil weist die Arretierhülse eine Mehrzahl von umlaufend angeordneten und durch einen Schlitz voneinander getrennten Federzungen auf. Die Arretierhülse umgreift mehr oder weniger vollständig den Bereich, in dem die beiden Muffenteile ineinander gesteckt sind.

DE 40 10 234 A1 offenbart ein Kabelschutzrohr mit zueinander komplementären Eindrehungen 4,6 in den Endbereichen, die im Verbindungszustand mit korrespondierenden Nuten zusammenwirken.

CA 695 250 A offenbart ein Verbindungselement zum Verbinden von zwei gegenüberliegenden Rohrleitungen. Die Rohrleitungen weisen jeweils auf ihrem Außenumfang eine Nut auf, die mit einem Spannring zusammenwirkt, um die Enden der Rohrleitungen mit dem Verbindungselement zusammenzuhalten.

Der Spannring weist eine Unterbrechung auf.

EP 2 407 698 A2 offenbart eine Kupplungseinrichtung zum Verbinden einer erster Fluidleitung mit einer zweiten Fluidleitung. Die Kupplungseinrichtung weist auf der Innenseite Innenrastkonturen auf, die mit auf der Außenseite angeordneten Außenrastkonturen der Fluidleitungen zusammenwirken, um die gegenüberliegenden Enden der Fluidleitungen zusammenzuhalten.

DE 10 2008 018 426 A1 offenbart eine Kupplungseinrichtung zum Verbinden einer ersten Fluidleitung mit einer zweiten Fluidleitung. Die Kupplungseinrichtung weist in zwei Umfangsnuten angeordnete Rastringe auf, die mit dem Außenumfang der Fluidleitungen zusammenwirken.

DE 85 19 902 U1 offenbart einen Steckverbinder für flexible Rohrleitungen. Die Steckverbindung umfasst ein Steckerteil sowie ein Muffenteil, die durch am

Steckerteil befestigte, einander gegenüberliegende Rastarme miteinander fixierbar sind.

DE 10 2009 036 463 A1 offenbart eine Kupplungsbaugruppe für eine Fahrzeugklimaanlage. Die Kupplungsbaugruppe weist elastische Rastarme auf, die mit einer umlaufenden Ausbuchtung an einem Rohrelement zusammenwirken. Die Rastnasen sind durch Schlitz getrennt.

EP 1 726 865 A2 offenbart eine Verbindungsanordnung zur Verbindung zweier Fluidleitungen. Die Rastverbindungen werden mittels einer Hülse realisiert. Die Hülse weist Halterippen auf, die im Verbindungszustand formschlüssig verrasten.

Insbesondere bei Medienleitungen mit erhöhten Sicherheitsanforderungen entsteht ein zusätzlicher Aufwand dadurch, dass einerseits sichergestellt werden muss, dass eine ausreichende Montagekraft aufgebracht wird, andererseits dass die Schraubverbindung beispielsweise gegen unbeabsichtigtes Öffnen gesichert wird.

Der vorliegenden Erfindung liegt deshalb die Aufgabe zu Grunde, ein Steckverbinderanordnung sowie ein Verfahren zum Verbinden von Medienleitungen anzugeben, bei dem eine ausreichende Montagekraft sichergestellt ist und gleichzeitig die Sicherheit gegen ein unbeabsichtigtes Lösen der Verbindung gesteigert ist.

Erfindungsgemäß wird die vorgenannte Aufgabe durch ein gattungsgemäßes Steckverbinderanordnung mit den Merkmalen des Kennzeichnungsteils des unabhängigen Anspruchs 1 erreicht. Vorteilhafte Ausgestaltungsmerkmale sind in den abhängigen Ansprüchen sowie der anschließenden Beschreibung enthalten.

Die Steckverbinderanordnung umfasst einen Anschlusskörper, der eine Aufnahmeöffnung zur zumindest teilweisen Aufnahme des Ansatzbauteils aufweist. Das Ansatzbauteil weist dazu insbesondere ein Aufnahmegegenstück auf, mit dem das Ansatzbauteil in die Aufnahmeöffnung einführbar ist. Das Aufnahmegegenstück und die Aufnahmeöffnung sind zueinander korrespondierend ausgebildet. Der Anschlusskörper und das Ansatzbauteil sind folglich ineinander steckbar, indem das Aufnahmegegenstück in die Aufnahmeöffnung eingesteckt wird. Die Aufnahmeöffnung weist beispielsweise mindestens zwei, vorzugsweise drei Absätze auf, die stufenartig zueinander angeordnet sind. Die Absätze sind Bereiche in der Aufnahmeöffnung mit unterschiedlichen Innendurchmessern. Vorzugsweise ist vorgesehen, dass die Aufnahmeöffnung oder das Aufnahmegegenstück zur Aufnahme mindestens einer Dichtung, vorzugsweise eines O-Rings, ausgebildet ist, die zwischen dem Anschlusskörper und dem Ansatzbauteil dichtet. Durch die mehrstufige Ausgestaltung der Aufnahmeöffnung wird das Ansatzbauteil bereits kippsicher in der Aufnahmeöffnung aufgenommen.

Die Aufnahmeöffnung steht insbesondere mit dem Fluidkanal des Anschlusskörpers in Verbindung, so dass das Ansatzbauteil mit dem Fluidkanal des Anschlusskörpers, insbesondere mit dem darin geführten Medium, in Verbindung bringbar ist. Im in die Aufnahmeöffnung eingesteckten Zustand steht das Ansatzbauteil zumindest teilweise mit dem Fluidkanal in Verbindung, so dass das in dem Fluidkanal geführte Fluid mit dem Ansatzbauteil in Verbindung kommen oder das Ansatzbauteil durchströmen kann. Beispielsweise weist auch das Ansatzbauteil einen Fluidkanal auf, so dass der Fluidkanal des Anschlusskörpers mit dem Fluidkanal des Ansatzbauteils verbunden ist, wenn das Ansatzbauteil in den Anschlusskörper eingesteckt ist.

Bei dem Anschlusskörper handelt es sich beispielsweise um einen Bogen mit beliebigem Winkel, ein T-Stück oder ein anderes Leitungsbauelement einer Medienleitung. Bei dem Ansatzbauteil handelt es sich beispielsweise um einen Sensor, ein Dornprofil oder ein weiteres Leitungsbauteil einer Medienleitung, insbesondere einen Bogen, ein T-Stück oder eine Rohrleitung. Der Anschlusskörper und das Ansatzbauteil sind je nach Anwendung in Kunststoff oder in metallischer Ausführung vorgesehen.

Vorzugsweise ist das Ansatzbauteil als Sensor ausgebildet, insbesondere mit einem Sensorgehäuse. Beispielsweise weist das Sensorgehäuse mindestens eine Sensorkammer auf, wobei ein Sensorkanal zwischen Fluidkanal und Sensorkammer ausgebildet ist. In dem Sensorkanal wird die Sensorfunktion realisiert. Vorteilhaft ist der Sensorkanal zwischen Fluidkanal und Sensorkammer durch ein Sensormittel verschlossen, beispielsweise eine Membran, eine Glasplatte und/oder ein optisches Element.

Der Anschlusskörper und das Ansatzbauteil werden verbunden, indem das Ansatzbauteil zunächst zumindest teilweise in die Aufnahmeöffnung des Anschlusskörpers eingeführt wird. Die eigentliche Verbindung wird durch das Verbindungselement realisiert, das sowohl mit dem Anschlusskörper als auch mit dem Ansatzbauteil eine formschlüssige Rastverbindung ausbildet. Dazu wird das Verbindungselement auf das Ansatzbauteil in einer ersten Aufpressrichtung aufgepresst, wobei sich das Verbindungselement und/oder zumindest ein Teil des Ansatzbauteils zumindest teilweise elastisch verformt und anschließend ein formschlüssiges - unlösbares - Verrasten des Verbindungselements mit dem Ansatzbauteil erfolgt. "Unlösbar" bedeutet in diesem Zusammenhang, dass die Verbindung bei gewöhnlicher Benutzung nicht lösbar ist, da das Verbindungselement und das Ansatzbauteil bei einer Kraftaufbringung entgegen der Aufpressrichtung formschlüssig ineinandergreifen und ein Lösen nur durch zumindest teilweise mechanische Zerstörung möglich ist.
Ferner wird das Verbindungselement auf den Anschlusskörper in einer zweiten Aufpressrichtung aufgepresst, wobei sich das Verbindungselement und/oder zumindest ein Teil des Anschlusskörpers zumindest teilweise elastisch verformt und anschließend ein formschlüssiges - unlösbares - Verrasten des Verbindungselements mit dem Anschlusskörper erfolgt.

Das Aufpressen wird dadurch vereinfacht, dass an mindestens einer in der jeweiligen Aufpressrichtung angeordneten Stirnseite des Verbindungselementes mindestens eine über den gesamten Umfang vorgesehene Einführschräge ausgebildet ist, die das Aufschieben des Verbindungselementes auf den Anschlusskörper und/oder das Ansatzbauteil vereinfacht. Vorzugsweise ist an jeder der gegenüberliegenden Stirnseiten des Verbindungselements eine Einführschräge vorgesehen.

Der Formschluss zwischen dem Verbindungselement und dem Anschlusskörper bzw. dem Ansatzbauteil verhindert, dass das Verbindungselement entgegen der ersten oder zweiten Aufpressrichtung ablösbar ist.

Insbesondere ist vorgesehen, dass der Anschlusskörper und/oder das Ansatzbauteil mindestens einen Rastbereich, vorzugsweise eine Mehrzahl an Rastbereichen, aufweist. Vorzugsweise ist der eine Rastbereich oder die Mehrzahl an Rastbereichen elastisch. Beispielweise weist der Anschlusskörper einen ersten Ringkragen und das Ansatzbauteil einen zweiten Ringkragen auf, wobei das Verbindungselement während der Montage derart elastisch verformt wird, dass das Verbindungselement zumindest teilweise den ersten bzw. den zweiten Ringkragen übertreten kann, um sich hinter dem jeweiligen Ringkragen zumindest teilweise in seine Ausgangsform zu verformen und dadurch eine formschlüssige Verbindung auszubilden. Vorzugsweise weist das Verbindungselement dazu mindestens eine erste Rastfläche und eine zweite Rastfläche auf, wobei die erste Rastfläche mit dem ersten Ringkragen und die zweite Rastfläche mit dem zweiten Ringkragen formschlüssig verrastbar ist. Der Außenumfang, insbesondere der Außendurchmesser, des ersten Ringkragens und des zweiten Ringkragens ist dazu größer als der Innenumfang, insbesondere Innendurchmesser des unverformten Teils des Verbindungselements, der hinter dem jeweiligen Ringkragen verrastbar ist. Vorzugsweise ist der Ringkragen des Anschlusskörpers und/oder der Ringkragen des Ansatzbauteils umfänglich geschlossen.

Alternativ dazu ist auch vorgesehen, dass eine formschlüssige Rastverbindung dadurch ausgebildet wird, dass der Anschlusskörper und/oder das Ansatzbauteil eine Rastnut aufweisen, und dass das Verbindungselement mindestens eine Rastlippe aufweist. Zur Herstellung der Verbindung wird das Verbindungselement, insbesondere im Bereich der Rastlippe derart elastisch verformt, dass die Rastlippe beim Verformen des Verbindungselements in seine Ausgangsform zumindest teilweise in die Rastnut eindringt. Der Innenumfang der Rastlippe, insbesondere der Innendurchmesser, ist dazu geringer als der Außenumfang, insbesondere der Außendurchmesser, mindestens des die Rastnut in Richtung des Verbindungselements umgebenden Bereichs.

Das Verbindungselement ist vorzugsweise zumindest teilweise aus einem thermoplastischen Kunststoff, beispielsweise Polyoxymethylen (POM), hergestellt. Dadurch ist eine Verformbarkeit bei gleichzeitig guter Dimensionsstabilität gewährleistet.

Die erfindungsgemäße Steckverbinderanordnung hat gegenüber dem Stand der Technik den Vorteil, dass ein unbeabsichtigtes Trennen der Verbindung zwischen dem Anschlusskörper und dem Ansatzbauteil verhindert wird, da ein Lösen der Verbindung nur durch zumindest teilweise mechanische Zerstörung des Verbindungselementes oder des Anschlusskörpers bzw. des Ansatzbauteils möglich ist. Ferner ist durch die geometrische Ausgestaltung des Verbindungselements eine definierte Montagekraft aufbringbar.

Ferner ist bei der Steckverbinderanordnung vorgesehen, dass die erste Rastverbindung und die zweite Rastverbindung umfangsmäßig geschlossen ausbildet sind. Eine derartige umfangsmäßig geschlossene Rastverbindung bedeutet, dass die die Rastverbindung ausbildenden Bereiche des Verbindungselementes, des Anschlusskörpers und des Ansatzbauteils keine Schlitze, Ausnehmungen oder ähnliches aufweisen, die während des Rastvorgangs ein flexibles Ausweichen der Bauteile und ein anschließendes Verrasten der Bereiche zu ermöglichen.

Eine umfangsmäßig geschlossene Rastverbindung wird dadurch ausgebildet, dass sich die an der Rastverbindung beteiligten Bereiche der Bauelemente - zumindest temporär - elastisch verformen, insbesondere komprimiert oder gedehnt werden. Insbesondere wird eine umfangsmäßig geschlossene Rastverbindung dadurch ausgebildet, dass sich das Verbindungselement elastisch verformt, insbesondere durch elastische Verformung zumindest temporär seinen Umfang erweitert. Durch die elastische Verformung, insbesondere elastische Erweiterung seines Umfangs, kann das Verbindungselement auf den Anschlusskörper bzw. das Ansatzbauteil aufgebracht werden, um anschließend zumindest teilweise in seine Ausgangsform zurückzukehren und dabei formschlüssig mit dem Anschlusskörper bzw. dem Ansatzbauteil verbunden werden. Vorzugsweise wird das Verbindungselement auf den Anschlusskörper und das Ansatzbauteil aufgepresst.

Bei der umfangsmäßig geschlossenen Rastverbindung handelt es sich um eine über den gesamten Umfang ausgebildete formschlüssige Verbindung. Durch das Verbindungselement wird das Ansatzbauteil fest an dem Anschlusskörper gehalten. Ein Lösen der umfangsmäßig geschlossenen Rastverbindung zwischen dem Verbindungselement und dem Anschlusskörper oder dem Verbindungselement und dem Ansatzbauteil ist nur durch mechanische Zerstörung des Verbindungselementes möglich. Bei der umfangsmäßig geschlossenen Rastverbindung handelt es sich folglich um eine unlösbare Verbindung, wobei das bedeutet, dass diese nur unter zumindest teilweiser Zerstörung lösbar ist. Zur Herstellung der Verbindung wird das Verbindungselement unter elastischer Verformung derart auf das Ansatzbauteil aufgebracht, insbesondere aufgepresst, dass eine umfangsmäßig geschlossene Rastverbindung ausgebildet wird. Ferner wird anschließend das Verbindungselement unter elastischer Verformung auf den Anschlusskörper aufgebracht, insbesondere aufgepresst, so dass ebenfalls eine umfangsmäßig geschlossene Rastverbindung entsteht.

Eine weitere Ausgestaltung sieht vor, dass ein Schlitz zwischen zwei Randbereichen des Verbindungselementes, also zwischen einem ersten Randbereich und einem zweiten Randbereich, angeordnet ist. Der Schlitz ist folglich so angeordnet, dass im ersten Randbereich und im zweiten Randbereich des Verbindungselementes, betrachtet entlang der Längsachse, jeweils ein Steg verbleibt. Der im Randbereich verbleibende Steg führt dazu, dass die formschlüssige Rastverbindung umfangsmäßig geschlossen ist, obwohl das Verbindungselement zumindest über einen Teil seiner Höhe mindestens einen Schlitz aufweist.

Gemäß einer weiteren Ausgestaltung der Steckverbinderanordnung ist vorgesehen, dass das Verbindungselement einen ersten Rastabschnitt und einen zweiten Rastabschnitt aufweist, wobei vorzugsweise der erste Rastabschnitt mit dem Anschlusskörper und der zweite Rastabschnitt mit dem Ansatzbauteil verrastet ist. Insbesondere ist der erste Rastabschnitt und/oder der zweite Rastabschnitt als Rastrücksprung ausgebildet. Das Verbindungselement ist mit dem ersten Rastabschnitt bzw. mit dem zweiten Rastabschnitt so auf den Anschlusskörper bzw. das Ansatzbauteil aufgebracht, dass eine formschlüssige Verbindung zwischen dem ersten Rastabschnitt bzw. dem zweiten Rastabschnitt und einem Bereich an dem Anschlusskörper bzw. dem Ansatzbauteil entsteht.

Vorzugsweise ist an den Anschlusskörper ein erster Ringkragen und/oder an dem Ansatzbauteil ein zweiter Ringkragen ausgebildet, so dass der erste Rastabschnitt mit dem ersten Ringkragen des Anschlusskörpers und der zweite Rastabschnitt mit dem zweiten Ringkragen des Ansatzbauteils formschlüssig verrasten kann. Vorzugsweise verrastet eine erste Rastfläche des Verbindungselements mit dem ersten Ringkragen und eine zweite Rastfläche des Verbindungselements mit dem zweiten Ringkragen. Sowohl der erste Rastabschnitt als auch der zweite Rastabschnitt sind umfangsmäßig geschlossen. Ferner sind auch der erste Ringkragen und der zweite Ringkragen umfangsmäßig geschlossen.

Der erste Rastabschnitt und der zweite Rastabschnitt sind vorzugsweise als ein zusammenhängender Rastrücksprung mit zwei gegenüberliegenden Rastflächen oder alternativ als zwei separate Rastrücksprünge ausgebildet.

Gemäß einer weiteren Ausgestaltung der Steckverbinderanordnung ist vorgesehen, dass ein Innenumfang des Verbindungselementes kreisringförmig ausgebildet ist. Besonders bevorzugt ist das Verbindungselement insgesamt kreisringförmig ausgebildet ist. Durch die kreisringförmige, insbesondere rotationssymmetrische, Ausgestaltung des Innenumfangs des Verbindungselementes, insbesondere des ersten Rastabschnitts und des zweiten Rastabschnitts, ist eine vorteilhafte Montage des Verbindungselementes möglich. Zudem ist dadurch nach der Montage, also der Herstellung der Verbindung mittels des Verbindungselementes, eine Drehbarkeit des Ansatzbauteils relativ zum Anschlusskörper - in Abhängigkeit der Ausführungsform - gewährleistet.

Vorzugsweise ist vorgesehen, dass das Verbindungselement insgesamt kreisringförmig ausgebildet ist. Beispielsweise weist das Verbindungselement einen kreisringförmigen Grundkörper auf, der mindestens einen, insbesondere zwei, Rastabschnitte aufweist. Die Rastabschnitte sind vorzugsweise als Rastrücksprung oder als Rastrücksprünge, also als Bereiche mit erweitertem Innendurchmesser ausgebildet. Durch die ringförmige Ausgestaltung ist eine gleichmäßige elastische Verformung während des Aufbringens des Verbindungselementes auf den Anschlusskörper und/oder auf das Ansatzbauteil gewährleistet.

Insbesondere ist auch vorgesehen, dass das Verbindungselement, insbesondere der Grundkörper, in seinem Umfang und/oder in seiner axialen Erstreckung mindestens einen Bereich aufweist, dessen Material in Bezug auf den verbleibenden Grundkörper bzw. das verbleibende Verbindungselement verschieden ist. Beispielsweise eine größere Elastizität aufweist. Dadurch kann beispielsweise eine lokal unterschiedliche Verformbarkeit erreicht werden, die den Montagevorgang vereinfacht. Vorzugsweise ist eine Mehrzahl von Bereichen im Umfang und/oder in der axialen Erstreckung mit einem unterschiedlichen Material vorgesehen.

Die Steckverbinderanordnung wird gemäß einer weiteren Ausgestaltung dadurch verbessert, dass das Verbindungselement ein elastisches Ausgleichselement aufweist, und dass das Ausgleichselement, insbesondere in axialer Richtung, zumindest teilweise zwischen dem Anschlusskörper und dem Ansatzbauteil angeordnet ist. Das Ausgleichselement ist folglich derart am Verbindungselement angeordnet, dass das Ausgleichselement im Montagezustand zumindest teilweise, beispielsweise an einem Absatz des Anschlusskörpers, zwischen dem Anschlusskörper und dem Ansatzbauteil angeordnet ist. Es ist vorgesehen, dass das Ausgleichselement form- und/oder kraft- und/oder stoffschlüssig mit dem Verbindungselement verbunden ist. Vorzugsweise ist vorgesehen, dass das Ausgleichselement an das Verbindungselement, insbesondere einen Grundkörper des Verbindungselements, angeformt, bevorzugt angespritzt oder angedruckt ist. Ferner ist auch vorgesehen, dass das Verbindungselement mindestens eine Rastausnehmung für das Ausgleichselement aufweist und das Ausgleichselement selbst oder ein Teil des Ausgleichselementes zum Ausbilden einer formschlüssigen Verbindung in die Rastausnehmung eingreift.

Gemäß einer weiteren Ausgestaltung ist vorgesehen, dass das Ausgleichselement einen kleineren Elastizitätsmodul als ein Grundkörper des Verbindungselements aufweist, insbesondere liegt der Elastizitätsmodul des Grundkörpers des Verbindungselements, insbesondere des Verbindungselements mit Ausnahme des Ausgleichselements, im Bereich zwischen 1 GPa und 10 GPa und der Elastizitätsmodul des Ausgleichselements im Bereich zwischen 0,0004 GPa und 0,1 GPa. Das Ausgleichselement ist aus einem anderen Material als das verbleibende Verbindungselement ausgebildet. Insbesondere ist das Ausgleichselement aus einem Material ausgebildet, das elastischer als das Material des verbleibenden Verbindungselementes ist.

Als vorteilhafte Materialien für das Ausgleichselement haben sich Elastomere, insbesondere thermoplastische Elastomere, herausgestellt. Besonders bevorzugt sind Styrol-Blockcopolymere, insbesondere Styrol-Ethylen-Butylen-StyrolCopolymere (SEBS). Vorteilhaft ist das Verbindungselement ein Zweikomponentenbauteil aus POM - Grundkörper - und einem Styrol-Blockcopolymer - Ausgleichselement.

Das Verbindungselement weist insbesondere eine elastische Verformbarkeit zwischen 1% und 15% auf. Das Material des Verbindungselements ist vorzugsweise so gewählt, dass die elastische Verformung bei anliegendem Betriebsdruck zwischen 1% und 2% liegt. Beim Herstellen der Rastverbindungen erfolgt eine elastische Verformung des Verbindungselements insbesondere im Bereich zwischen 6% und 7%, insbesondere 6,7%.

Insbesondere bei der Montage wird das Ausgleichselement zumindest teilweise komprimiert, vorzugsweise um bis zu 50% komprimiert.

Das Ausgleichselement ist insbesondere dazu vorgesehen, Toleranzen zwischen dem Anschlusskörper und dem Ansatzbauteil auszugleichen. Gleichzeitig wird durch das Ausgleichselement eine axiale Vorspannung erreicht, die auf das Verbindungselement wirkt.

Vorzugsweise ist vorgesehen, dass das Verbindungselement, insbesondere das Ausgleichselement, zumindest teilweise mit einer Beschichtung versehen ist, vorzugsweise mit einer Beschichtung aus Polytetrafluorethylen (PTFE). Diese Beschichtung gewährleistet beispielsweise die Drehbarkeit des Ansatzbauteils relativ zum Anschlusskörper im Bereich der ersten Rastverbindung und/oder der zweiten Rastverbindung.

Um insbesondere vorteilhaft eine Vorspannung zwischen dem Anschlusskörper und dem Ansatzbauteil in axialer Richtung zu erzeugen, ist gemäß einer weiteren Ausgestaltung der Steckverbinderanordnung vorgesehen, dass das Ausgleichselement in jeder Schnittebene, die die Längsachse L des Verbindungselements beinhaltet, einen polygonalen, insbesondere trapezförmigen, kreisförmigen oder ovalen Querschnitt aufweist, oder dass das Ausgleichselement einen Querschnitt mit mindestens einem konkaven oder konvexen Bereich aufweist. Jede Ebene, die die Längsachse des Verbindungselements vollständig beinhaltet, und die das Ausgleichselement schneidet, dient als Schnittebene für den Querschnitt. Das Ausgleichselement ist insbesondere rotationssymmetrisch.

Eine erste Variante eines Ausgleichselementes hat einen rechteckigen Querschnitt, so dass das Ausgleichselement im Bereich zwischen dem Anschlusskörper und dem Ansatzbauteil eine konstante Dicke aufweist. Bevorzugt ist allerdings vorgesehen, dass das Ausgleichselement einen trapezförmigen Querschnitt aufweist, insbesondere einen sich in Richtung der Längsachse des Verbindungselementes verjüngenden trapezförmigen Querschnitt aufweist. Durch einen trapezförmigen Querschnitt wirkt das Ausgleichselement zwischen dem Anschlusskörper und dem Ansatzbauteil wie ein Keil und erzeugt dadurch eine vorteilhafte axiale Vorspannung.

Ferner ist auch vorgesehen, dass das Ausgleichselement einen Querschnitt mit mindestens einem konvexen oder konkaven Bereich aufweist. Vorzugsweise weist der Querschnitt mindestens zwei konkave Bereiche auf. Insbesondere ist vorgesehen, dass das Ausgleichselement mindestens eine erste Anlagefläche und mindestens eine zweite Anlagefläche aufweist. Die Anlageflächen dienen insbesondere der Anlage an dem Anschlusskörper und dem Ansatzbauteil, wenn das Ausgleichselement zwischen diesen angeordnet ist. Beispielsweise sind die erste Anlagefläche und/die zweite Anlagefläche konvex oder konkav ausgebildet oder weisen mindestens einen oder eine Mehrzahl von konvexen und/oder konkaven Bereichen auf.

Ferner ist gemäß einer Ausgestaltung auch vorgesehen, dass das Ausgleichselement in axialer Richtung des Verbindungselements versetzt angeordnet ist. Durch eine derartige Anordnung des Ausgleichselementes kann beispielsweise eine Montagerichtung des Verbindungselementes vorgegeben werden, so dass das Verbindungselement nur in einer Ausrichtung, also beispielsweise nur in einer bestimmten Ausrichtung auf dem Anschlusskörper oder nur in einer bestimmten Ausrichtung auf dem Ansatzbauteil montierbar ist. Es wird folglich durch die Form des Verbindungselements eine bevorzugte Aufpressrichtung definiert. Ferner ist bei einer derartigen Ausgestaltung von Vorteil, wenn zunächst der kürzere Abschnitt des Verbindungselements auf den Anschlusskörper oder das Ansatzbauteil gepresst wird und anschließend der längere Abschnitt des Verbindungselements auf das verbleibende Bauteil, also den Anschlusskörper oder das Ansatzbauteil. Die im Bereich des längeren Abschnitts entstehende Aufdehnung hat dabei einen geringeren Einfluss auf den kürzeren Abschnitt als bei einem gleichlangen Abschnitt entstehen würde.

Um die Verbindung zwischen Anschlusskörper und Ansatzbauteil zu lösen, ist gemäß einer weiteren Ausgestaltung vorgesehen, dass das Verbindungselement, insbesondere der Grundkörper, mindestens eine Sollbruchstelle zum irreversiblen radialen oder axialen Auftrennen aufweist, bevorzugt dass das Verbindungselement mindestens zwei Sollbruchstellen aufweist. Der Begriff "Sollbruchstelle" umfasst auch Sollbruchbereiche, die eine große Erstreckung aufweisen, beispielsweise vollumfänglich um das Verbindungselement ausgebildet sind.

Die Sollbruchstelle zum radialen Auftrennen ist derart vorgesehen, dass das Verbindungselement durch die Sollbruchstelle derart aufreißt, dass sich zumindest teilweise der Umfang erweitert und so ein Lösen des Ansatzbauteils vom Anschlusskörper möglich ist. Die Sollbruchstelle zum axialen Auftrennen ist derart vorgesehen, dass eine Zweiteilung des Verbindungselementes in axialer Richtung erfolgt, beispielsweise also sich das Verbindungselement in zwei separate Ringe auftrennt. Vorzugsweise ist eine Kombination aus radialer und axialer Sollbruchstelle bzw. sowohl eine axiale Sollbruchstelle als auch eine radiale Sollbruchstelle vorgesehen, so dass je nach Wahl des Verwenders sowohl ein axiales Auftrennen als auch ein radiales Auftrennen möglich ist.

Ferner ist vorgesehen, dass die Sollbruchstelle zum axialen Auftrennen mittig oder alternativ dazu axial versetzt in Bezug auf die Längsachse des Verbindungselementes angeordnet ist - entlang der Längsachse. Durch eine mittige Anordnung der Sollbruchstelle verbleibt das Ausgleichselement je nach - nicht vorhersehbarer - Materialschädigung entweder am Anschlusskörper oder am Ansatzbauteil. Durch eine versetzte Anordnung der Sollbruchstelle kann das Auftrennen des Verbindungselementes gezielt gesteuert werden, nämlich festgelegt werden, ob beispielsweise das Ausgleichselement am Anschlusskörper oder am Ansatzbauteil verbleibt bzw. oberhalb oder unterhalb des Ausgleichselements aufbricht. Sowohl durch ein axiales als auch durch ein radiales Auftrennen wird stets die Verbindung zwischen Anschlusskörper und Ansatzbauteil aufgetrennt.

Als besonders vorteilhaft hat sich gemäß einer weiteren Ausgestaltung herausgestellt, wenn vorgesehen ist, dass die Sollbruchstelle mindestens eine Eingriffsnut für ein Werkzeug auf dem Außenumfang des Verbindungselementes, insbesondere des Grundkörpers, umfasst, insbesondere dass an der Eingriffsnut mindestens ein Nutkragen vorgesehen ist.

Vorzugsweise wird die axiale Sollbruchstelle folglich mindestens durch eine um den Umfang des Verbindungselementes herumlaufende Eingriffsnut ausgebildet. Zusätzlich oder alternativ dazu ist auch eine Sollbruchstelle als parallel zur Längsrichtung des Verbindungselementes angeordnete radiale Sollbruchstelle vorgesehen. Besonders bevorzugt ist sowohl eine über den gesamten Umfang verlaufende Eingriffsnut zum axialen Auftrennen als auch - in zumindest einem Abschnitt - eine Eingriffsnut zum radialen Auftrennen vorgesehen.

Zudem ist bevorzugt vorgesehen, dass an der Eingriffsnut mindestens ein Nutkragen, vorzugsweise zwei Nutkragen, also jeweils ein Nutkragen auf jeder Seite der Eingriffsnut, vorgesehen sind. Der Nutkragen stellt eine Erhebung, vorzugsweise mit rechteckigem Querschnitt, an mindestens einer Nutflanke dar, wodurch die Hebelmöglichkeit mit einem Werkzeug verbessert wird. Vorzugsweise ist an jeder Nutflanke ein Nutkragen vorgesehen, so dass die Tiefe der Nut durch den eine Erhöhung bildenden Nutkragen vergrößert und damit der Eingriff mittels eines Hebelwerkzeugs vereinfacht wird.

Besonders vorteilhaft ist ein Verbindungselement mit einer über den gesamten Umfang umlaufenden Eingriffsnut, die an mindestens einer Stelle eine radiale Eingriffsnut umfasst, die sich T-förmig von der umfänglich verlaufenden Eingriffsnut weg erstreckt. Ebenfalls sind die Nutkragen auf beiden Seiten der Eingriffsnut im Bereich des Übergangs der umfänglich verlaufenden Eingriffsnut zur radial verlaufenden Eingriffsnut T-förmig ausgebildet. Je nach Wahl des Benutzers kann das Verbindungselement im Bereich der umfänglich verlaufenden Eingriffsnut oder im Bereich der axial verlaufenden Eingriffsnut aufgetrennt werden. Vorzugsweise ist die axial verlaufende Eingriffsnut derart ausgebildet, dass sie sich nur auf einer Seite der umfänglich verlaufenden Eingriffsnut, beispielsweise also nur auf der Hälfte der Höhe des Verbindungselements, erstreckt. Dadurch kann die axiale Eingriffsnut derart aufgetrennt werden, dass sich das Verbindungselement nur von dem Bauteil, also dem Anschlusskörper oder dem Ansatzbauteil, löst, in dessen Richtung die Eingriffsnut orientiert ist.

Um die Montagerichtung bzw. eine Relativdrehung zwischen dem Ansatzbauteil und dem Anschlusskörper, beispielsweise bei einem winkligen Abgang oder einem Sensor festlegen zu können, ist gemäß einer weiteren Ausgestaltung vorgesehen, dass das Verbindungselement auf seinem Innenumfang mindestens eine Rastausnehmung und/oder mindestens einen Rastvorsprung zum Festlegen eines Drehwinkels zwischen Verbindungselement und Ansatzbauteil und/oder zwischen Verbindungselement und/oder Anschlusskörper aufweist. Mit dem Rastvorsprung oder der Rastausnehmung, die mit einem entsprechenden Gegenstück zusammenwirkt, lässt sich entweder lediglich ein einziger vorbestimmter Montagewinkel festlegen, nämlich indem nur eine einzige Rastposition zugelassen ist. Alternativ dazu kann durch Vorsehen von regelmäßig angeordneten, zusammenwirkenden Rastausnehmungen bzw. Rastvorsprüngen ein beliebiges Einstellen in vorgesehenen Winkelstufen ermöglicht werden.

Eine weitere vorteilhafte Ausgestaltung der Steckverbinderanordnung sieht vor, dass das Verbindungselement mindestens eine erste Rastfläche und mindestens eine zweite Rastfläche aufweist, und dass mindestens an der ersten Rastfläche und/oder mindestens an der zweiten Rastfläche mindestens ein Positioniermittel zum Festlegen eines Drehwinkels zwischen Verbindungselement und Ansatzbauteil und/oder zwischen Verbindungselement und/oder Anschlusskörper vorgesehen ist. Das Positioniermittel ist beispielsweise dadurch ausgebildet, dass die erste Rastfläche und/oder die zweite Rastfläche in Umfangsrichtung zumindest teilweise wellenförmig ausgebildet ist, und dass an dem Ansatzbauteil bzw. dem Anschlusskörper eine korrespondierende Gegenkontur vorgesehen ist, so dass bei der Montage ein Drehwinkel zwischen dem Verbindungselement und dem Ansatzbauteil bzw. dem Anschlusskörper festlegbar ist.

Beispielsweise sind in der ersten Rastfläche und/oder in der zweiten Rastfläche trapezförmige Vorsprünge in regelmäßigen Abständen zueinander angeordnet. Insbesondere sind als Gegenkontur entsprechend regelmäßig angeordnete trapezförmige Rücksprünge in dem Ringkragen des Ansatzbauteils und/oder dem Ringkragen des Anschlusskörpers ausgebildet. Die Trapezform hat den Vorteil, dass die korrespondierenden Vor- und Rücksprünge auf einfache Weise an den geneigten Flächen in ihre Rastposition gleiten können. Durch eine Mehrzahl an über dem Umfang der Rastflächen bzw. der Ringkragen angeordneten Vor- und Rücksprüngen kann der entsprechende Drehwinkel mit einer Schrittgröße in Abhängigkeit von dem Abstand der Vor- und Rücksprünge zueinander eingestellt werden. Vorzugsweise sind die erste und die zweite Rastfläche jeweils in einer Ebene angeordnet, die eine Normale zur Längsachse des Verbindungsmittels ist.

Das Positioniermittel ist folglich dazu vorgesehen, ein Moment um die Längsachse des Verbindungselementes zu übertragen. Das Positioniermittel ist vorzugsweise als formschlüssiger Eingriff zwischen der ersten Rastfläche bzw. der zweiten Rastfläche und der jeweiligen Gegenkontur an dem Ansatzbauteil oder dem Anschlusskörper ausgebildet.

Dieses Ausführungsbeispiel hat den Vorteil, dass über die Rastflächen die Kraftübertragung für die formschlüssigen Rastverbindungen erfolgt. Diese vorteilhafte Kraftübertragung kann auch dafür genutzt werden, den Winkel zwischen Verbindungselement und Ansatzbauteil bzw. Anschlusskörper festzulegen.

Gemäß einer besonders vorteilhaften Ausgestaltung der Steckverbinderanordnung ist vorgesehen, dass das Verbindungselement zumindest teilweise mit einer radialen Vorspannkraft an dem Anschlusskörper und/oder an dem Ansatzbauteil gehalten ist, wobei die Vorspannkraft vorzugsweise an einem ersten Ringkragen an dem Anschlusskörper und/oder an einem zweiten Ringkragen an dem Ansatzbauteil anliegt. Das Verbindungselement wird durch elastische Verformung derart auf den Anschlusskörper und das Ansatzbauteil aufgebracht, dass zunächst die formschlüssige, insbesondere umfänglich geschlossene, Rastverbindung ausgebildet wird. Ferner ist aber auch vorgesehen, dass beispielsweise der Außendurchmesser des entsprechenden Bereiches am Anschlusskörper bzw. am Ansatzbauteil geringfügig größer vorgesehen ist als der ursprüngliche Innendurchmesser des Verbindungselementes, so dass das Verbindungselement nach der Montage nicht vollständig in seine ursprüngliche Form zurückkehrt, sondern mit einer radialen Vorspannkraft sowohl am Anschlusskörper als auch am Ansatzbauteil anliegt.

Vorzugsweise weisen der erste Ringkragen und/oder der zweite Ringkragen ein Übermaß, also einen größeren Außendurchmesser, als der erste Rastabschnitt bzw. der zweite Rastabschnitt des Verbindungselements in seiner entspannten Ausgangsform auf, so dass die radiale Vorspannung im Bereich der Rastabschnitte bzw. Ringkragen ausgebildet ist. Alternativ betrachtet, weist der Innendurchmesser des ersten Rastabschnitts und/oder des zweiten Rastabschnitts ein Untermaß auf, um die Vorspannung zu erzeugen. Bevorzugt liegt das Übermaß bzw. das Untermaß im Bereich zwischen 0,1 mm und 0,2 mm, besonders bevorzugt 0,15 mm. Durch diese radiale Vorspannkraft wird die Zuverlässigkeit der Verbindung gesteigert.

Die axiale Stabilität der Steckverbinderanordnung wird gemäß einer weiteren Ausgestaltung dadurch gesteigert, dass der Anschlusskörper mindestens eine Anschlagfläche, insbesondere axial angeordnete Anschlagfläche, für das Verbindungselement aufweist. Die Anschlagfläche ist so angeordnet, dass das Verbindungselement mit seiner in Richtung des Anschlusskörpers gerichteten Stirnfläche oder Einführschräge im Montagezustand zumindest teilweise an dieser Anschlagfläche anliegt. Die Anschlagfläche verhindert somit eine weitere axiale Bewegung des Verbindungselementes in Richtung des Anschlusskörpers, wodurch beispielsweise das Ausgleichselement in Bezug auf axiale Kräfte entlastet wird und eine Beschädigung des Ausgleichselementes verhindert wird. Insbesondere ist die Anschlagfläche in einer Ebene angeordnet, deren Normale parallel zur Längsachse des Verbindungselements ausgerichtet ist.

Als vorteilhaft hat sich zudem herausgestellt, der Anschlusskörper einen Haltebereich für radial zuführbare Haltearme eines Montagewerkzeugs aufweist, insbesondere dass der Haltebereich mindestens eine Haltefläche aufweist. Bei der Montage wird eine Presskraft auf das Verbindungselement bewirkt. Damit das Verbindungselement auf den Anschlusskörper aufgepresst werden kann, muss eine Gegenkraft aufgebracht werden, der Anschlusskörper also gehalten werden. Dazu weist der Anschlusskörper einen Haltebereich auf, der mit radial zuführbaren Haltearmen greifbar ist. Vorzugsweise weist der Haltebereich eine Haltefläche auf, die vorzugsweise in einer Ebene angeordnet, deren Normale parallel zur Längsachse des Verbindungselements ausgerichtet ist. Ferner ist die Haltefläche so angeordnet, dass sie von dem Verbindungselement wegweisend angeordnet ist, so dass eine Haltekraft von den Haltearmen auf die Haltefläche übertragbar ist, die der Presskraft in der zweiten Aufpressrichtung entgegengesetzt ist.

Die eingangs genannte Aufgabe ist ferner durch ein Verfahren zur Verbindung eines Anschlusskörpers und eines Ansatzbauteils einer Medienleitung gelöst, das die folgenden Verfahrensschritte umfasst:
- Herstellen einer ersten formschlüssigen Rastverbindung zwischen einem Verbindungselement und dem Ansatzbauteil, indem das Verbindungselement in einer ersten Aufpressrichtung zumindest teilweise auf das Ansatzelement aufgepresst wird,
- Herstellen einer zweiten formschlüssigen Rastverbindung zwischen dem Verbindungselement und dem Anschlusskörper, indem das Verbindungselement in einer zweiten Aufpressrichtung zumindest teilweise auf den Anschlusskörper aufgepresst wird, so dass das Ansatzbauteil mittels des Verbindungselementes mit dem Anschlusskörper verbunden ist.

Ein derartiges Verbinden eines Ansatzbauteils mit einem Anschlusskörper hat den Vorteil, dass das Ansatzbauteil zuverlässig und mit einer vordefinierten Montagekraft am Anschlusskörper gehalten ist. Das Verbindungselement muss zumindest teilweise mechanisch zerstört werden, um die Verbindung aufzutrennen. Die erste Aufpressrichtung und die zweite Aufpressrichtung sind entgegengesetzt zueinander.

Eine erste Ausgestaltung des Verfahrens sieht vor, dass das Herstellen der ersten formschlüssigen Rastverbindung und das Herstellen der zweiten formschlüssigen Rastverbindung unter zumindest teilweise elastischer Verformung des Verbindungelements erfolgt. Vorzugweise erweitert das Verbindungselement durch das Aufpressen seinen Umfang und kann dadurch auf den Anschlusskörper oder das Ansatzbauteil aufgebracht werden.

Gemäß einer ersten Ausgestaltung des Verfahrens hat es sich als vorteilhaft herausgestellt, wenn die Presskraft zum Aufpressen des Verbindungselementes auf den Anschlusskörper bzw. das Anschlussbauteil unmittelbar auf das Verbindungselement, insbesondere eine Stirnfläche des Verbindungselementes, bewirkt wird. Dazu wird beispielweise ein Montageadapter verwendet, der das Ansatzbauteil übergreift. Ferner wird beispielsweise der Anschlusskörper bei der Montage von zwei Haltearmen gehalten, von zwei Seiten radial an den Anschlusskörper herangeführt werden.

Dadurch, dass die Presskraft vorzugsweise lediglich auf eine Stirnfläche des Verbindungselements bewirkt wird, wird das Verbindungselement beim Aufbringen lediglich mit einer Druckkraft belastet, die zu keiner Beschädigung des Verbindungselementes führt. Das elastische Verformen geschieht dadurch, dass das Verbindungselement mit Einführschrägen an entsprechenden Einführschrägen des Anschlusskörpers bzw. des Ansatzbauteils vorbeigleitet und dadurch in radialer Richtung aufgeweitet wird.

Weitere vorteilhafte Ausbildungen der Erfindung sind in den Unteransprüchen enthalten. Anhand der in den beiliegenden Zeichnungen dargestellten Ausführungsbeispiele wird die Erfindung genauer erläutert. Es zeigen:
- Fig. 1: ein Ausführungsbeispiel einer Steckverbinderanordnung in teilweiser geschnittener Ansicht,
- Fig. 2: ein Ausführungsbeispiel einer Steckverbinderanordnung in teilweiser geschnittener Ansicht,
- Fig. 3: ein Ausführungsbeispiel eines Verbindungselementes in teilweiser geschnittener Ansicht,
- Fig. 4: ein Ausführungsbeispiel eines Verbindungselementes in teilweiser geschnittener Ansicht,
- Fig. 5: ein Ausführungsbeispiel eines Verbindungselementes in teilweiser geschnittener Ansicht,
- Fig. 6a: ein Ausführungsbeispiel eines einseitig montierten Verbindungselementes in perspektivischer Ansicht,
- Fig. 6b: ein Ausführungsbeispiel eines Verbindungselementes in seitlicher Ansicht,
- Fig. 7: ein Ausführungsbeispiel eines Teils eines Anschlusskörpers in perspektivischer Ansicht,
- Fig. 8: die Montage einer Steckverbinderanordnung in perspektivischer Ansicht,
- Fig. 9: ein Ausführungsbeispiel eines einseitig montierten Verbindungselements in teilweise geschnittener Ansicht, und
- Fig. 10: ein Ausführungsbeispiel einer Steckverbinderanordnung in teilweiser geschnittener Ansicht,
- Fig. 11a: ein Ausführungsbeispiel eines einseitig montierten Verbindungselementes in teilweise geschnittener Ansicht,
- Fig. 11b: der Ausschnitt gemäß Fig. 13a entlang der Linie A-A,
- Fig. 12: ein Ausführungsbeispiel eines Verbindungselementes in teilweise geschnittener Ansicht,
- Fig. 13: ein Ausführungsbeispiel eines Anschlusskörpers und
- Fig. 14: ein schematischer Ablauf des Verfahrens zur Verbindung von Medienleitungen.

In den verschiedenen Figuren der Zeichnung sind gleiche Teile stets mit denselben Bezugszeichen versehen.

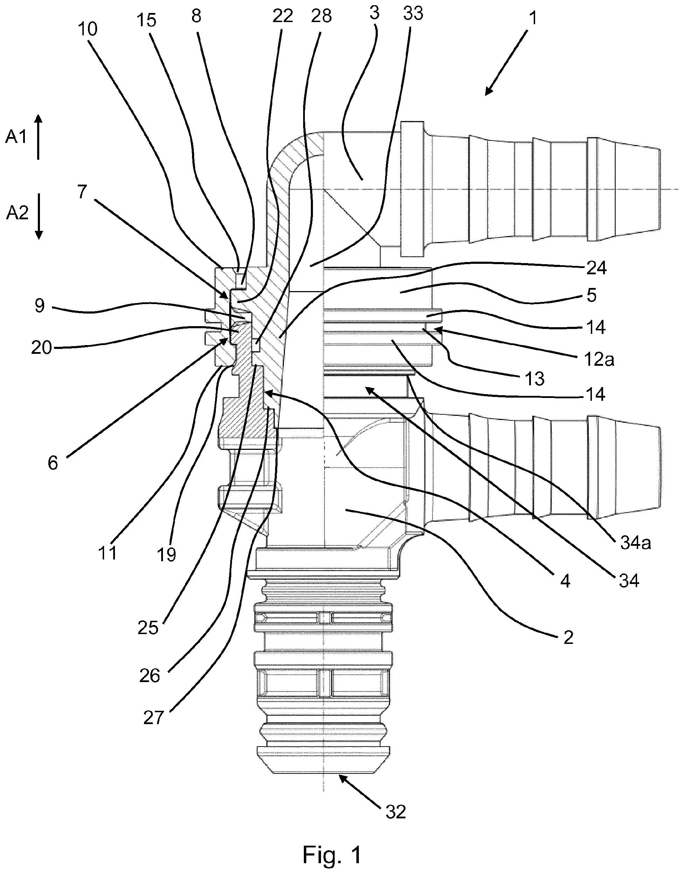

Fig. 1 zeigt ein Ausführungsbeispiel einer Steckverbinderanordnung 1 für Medienleitungen. Das Steckverbinderanordnung 1 umfasst einen Anschlusskörper 2, der bei diesem Ausführungsbeispiel als 90°-Bogen mit Dorn ausgebildet ist, sowie ein Ansatzbauteil 3, das bei diesem Ausführungsbeispiel auch als 90°-Bogen mit Dorn ausgebildet ist. Das Ansatzbauteil 3 ist zumindest teilweise in einer Aufnahmeöffnung 4 des Anschlusskörpers 2 aufgenommen und stabil in seiner Position gehalten. Der Anschlusskörper 2 und das Ansatzbauteil 3 sind mit einem Verbindungselement 5 miteinander verbunden. Das Verbindungselement 5 weist einen ersten Rastabschnitt 6 sowie einen zweiten Rastabschnitt 7 auf, wobei der erste Rastabschnitt 6 mit dem Anschlusskörper 2 und der zweite Rastabschnitt 7 mit dem Ansatzbauteil 3 verrastet ist und jeweils als eine formschlüssig, umfangsmäßig geschlossene Rastverbindung ausgebildet ist. Der erste Rastabschnitt 6 und der zweite Rastabschnitt 7 des Verbindungselementes 5 sind bei diesem Ausführungsbeispiel als Rastrücksprünge ausgebildet.

Der Anschlusskörper 2 weist einen Fluidkanal 32 auf, der bei diesem Ausführungsbeispiel mit dem Ansatzbauteil 3 verbunden ist, indem der Fluidkanal 32 mit einem Fluidkanal 33 des Ansatzbauteils 3 verbunden ist.

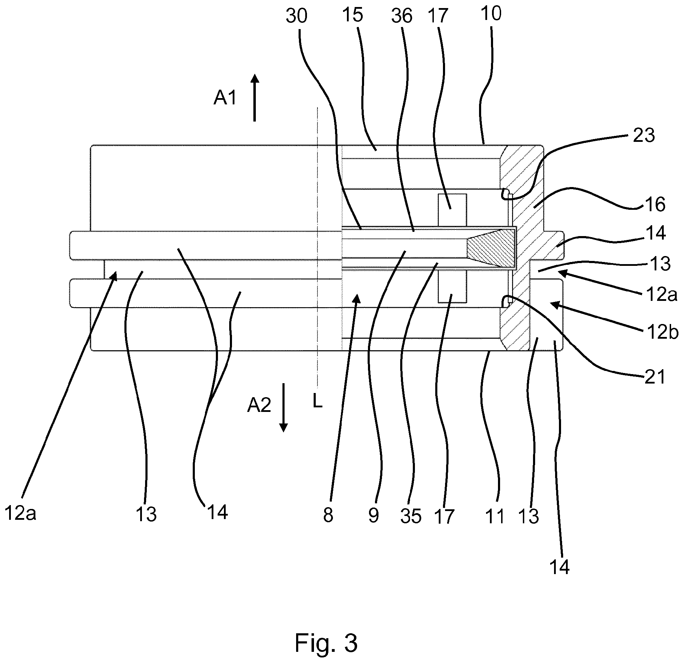

Das Verbindungselement 5 ist bei diesem Ausführungsbeispiel sowohl auf seinem Innenumfang 8 als auch insgesamt kreisringförmig ausgebildet. Das Verbindungselement 5 umfasst ein elastisches Ausgleichselement 9, das zumindest teilweise zwischen dem Anschlusskörper 2 und dem Ansatzbauteil 3 angeordnet ist und eine axiale Vorspannung verursacht. Das Ausgleichselement 9 ist aus einem anderen Material als das sonstige Verbindungselement 5 - der Grundkörper 16 - hergestellt und an den Grundkörper 16 des Verbindungselements 5 angeformt (siehe Fig. 3).

Bei diesem Ausführungsbeispiel ist das Ausgleichselement 9 mittig angeordnet, so dass es einen gleichen Abstand zu der in Richtung des Ansatzbauteils 3 orientierten Stirnfläche 10 sowie zu der in Richtung des Anschlusskörpers 2 orientierten Stirnfläche 11 aufweist. Ferner weist das Ausgleichselement 9 bei diesem Ausführungsbeispiel einen polygonalen Querschnitt auf, nämlich einen trapezförmigen Querschnitt, der sich in Richtung der Längsachse L (siehe Fig. 3) des Verbindungselementes 5 verjüngt.

Das Verbindungselement 5 weist ferner eine Sollbruchstelle 12a zum reversiblen axialen Auftrennen des Verbindungselementes 5 auf. Die Sollbruchstelle 12a umfasst eine Eingriffsnut 13 sowie an jeder Nutflanke einen Nutkragen 14, der den Eingriff mit einem Werkzeug erleichtert. Die Eingriffsnut 13, und damit auch die Sollbruchstelle 12a, ist versetzt in Richtung der Stirnfläche 11 bzw. in Richtung des Anschlusskörpers 2 orientiert, so dass ein Auftrennen unterhalb des Ausgleichselements 9 erfolgt.

Der erste Rastabschnitt 6 ist mit einem ersten Ringkragen 20 des Anschlusskörpers 2 verrastet, indem der erste Ringkragen 20 an einer Rastfläche 21 (siehe Fig. 3 bis 5) des ersten Rastabschnitts 6 vollumfänglich anliegt. Zudem weist der erste Ringkragen 20 ein Übermaß auf, so dass das Verbindungselement 5 im Bereich des ersten Rastabschnitts 6 eine radiale Vorspannkraft auf den Anschlusskörper 2 bewirkt. Ferner ist der zweite Rastabschnitt 7 mit einem zweiten Ringkragen 22 des Anschlussbauteils 3 verrastet, indem der zweite Ringkragen 22 an einer zweiten Rastfläche 23 (siehe Fig. 3 bis 5) vollumfänglich anliegt. Zudem weist der zweite Ringkragen 22 ein Übermaß auf, so dass das Verbindungselement 5 im Bereich des zweiten Rastabschnitts 7 eine radiale Vorspannkraft auf das Ansatzbauteil 3 bewirkt.

Das Verbindungselement 5 ist auf das Ansatzbauteil 3 in einer ersten Aufpressrichtung A1 aufgepresst worden. Ferner ist das Verbindungselement 5 auf den Anschlusskörper 2 in einer zweiten Aufpressrichtung A2 aufgepresst worden.

Das Ansatzbauteil 3 ist zumindest teilweise mit einem Aufnahmegegenstück 24 in die Aufnahmeöffnung 4 des Anschlusskörpers 2 eingebracht. Die Aufnahmeöffnung 4 weist einen ersten Absatz 25, einen zweiten Absatz 26 sowie einen dritten Absatz 27 auf, an denen das Aufnahmegegenstück 24 korrespondierend anliegt. Das Aufnahmegegenstück 24 weist zudem eine Dichtungsnut 28 auf, die zur Aufnahme einer - nicht dargestellten - Dichtung vorgesehen ist.

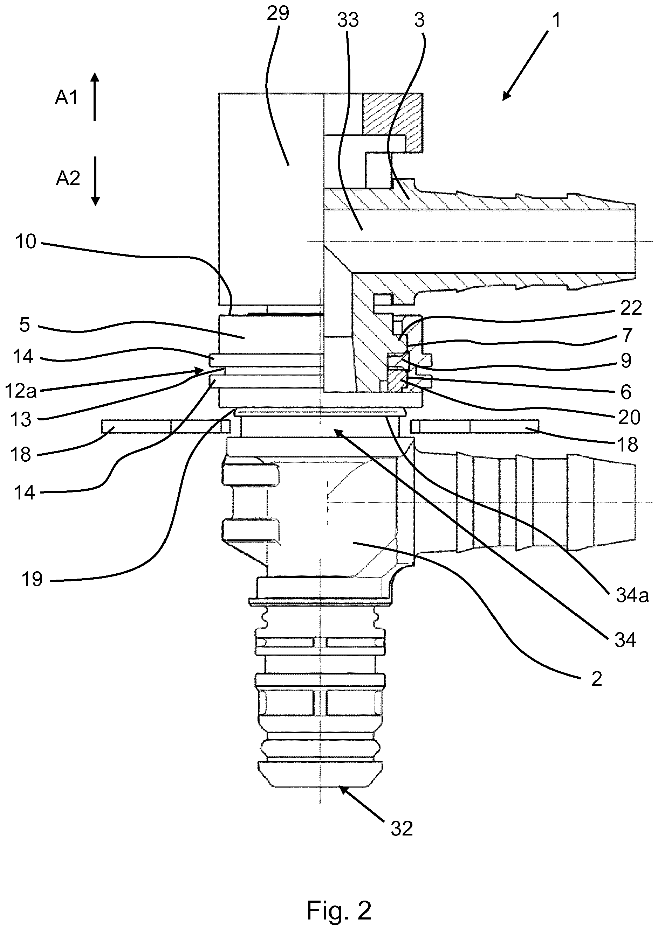

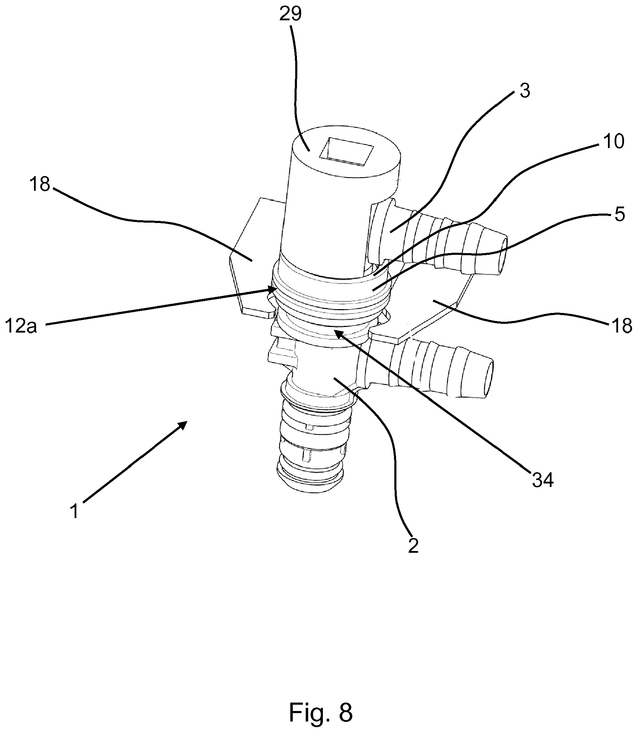

Der Anschlusskörper 2 weist einen Haltebereich 34 für Haltearme 18 eines Montagewerkzeugs auf (siehe Fig. 2 und Fig. 8). Der Haltebereich 34 weist insbesondere eine Haltefläche 34a auf, an der sich die Haltearme 18 abstützen können, um eine der Presskraft entgegengerichtete Haltekraft zu bewirken.

Fig. 2 zeigt ein Ausführungsbeispiel einer Steckverbinderanordnung 1 mit einem Anschlusskörper 2 und einem Ansatzbauteil 3. Das Steckverbinderanordnung 1 ist nahezu identisch zu dem Ausführungsbeispiel in Fig 1 ausgebildet, lediglich mit dem Unterschied, dass das Ausgleichselement 9 einen anderen Querschnitt aufweist.

In Fig. 2 ist zudem ein Montageadapter 29 dargestellt, der das Ansatzbauteil 3 zumindest teilweise übergreift und mit dem eine Presskraft auf die Stirnseite 10 des Verbindungselements 5 in der zweiten Aufpressrichtung A2 bewirkbar ist. Ferner sind Haltearme 18 dargestellt, die den Anschlusskörper 2 während des Aufpressens des Verbindungselements 5 halten. Die Haltearme 18 halten den Anschlusskörper 2 derart, dass beim Aufpressen in die zweite Aufpressrichtung A2 eine Gegenkraft bewirkt wird, die in Richtung der ersten Aufpressrichtung A1, also entgegengesetzt gerichtet ist. Die Haltearme 18 werden radial an den Anschlusskörper 2 herangeführt und greifen den Anschlusskörper 2 in einem Haltebereich 34. Insbesondere stützen sich die Haltearme 18 an der Haltefläche 34a ab. Der Fluidkanal 32 des Anschlusskörpers 2 ist auch hier mit dem Fluidkanal 33 des Ansatzbauteils 3 verbunden.

Fig. 3 zeigt ein Ausführungsbeispiel eines Verbindungselementes 5, das neben einer Sollbruchstelle 12a zum axialen Auftrennen ebenfalls eine Sollbruchstelle 12b zum radialen Auftrennen aufweist. Zudem umfasst jede der Sollbruchstellen 12a, 12b eine Eingriffsnut 13 sowie Nutkragen 14 auf. In beiden Aufpressrichtungen A1, A2 entlang der Längsachse L weist das Verbindungselement 5 Einführschrägen 15 auf, die das Aufpressen des Verbindungselementes 5 vereinfachen. Das Ausgleichselement 9 weist bei diesem Ausführungsbeispiel einen trapezförmigen Querschnitt auf und ist an dem ringförmigen Grundkörper 16 in einer Rastausnehmung 30 des Verbindungselementes 5 formschlüssig gehalten. Eine erste Anlagefläche 35 und eine zweite Anlagefläche 36 dienen der Anlage an einem Anschlusskörper 3 bzw. einem Ansatzbauteil 3 (siehe Fig. 1) Auf seinem Innenumfang 8 weist das Verbindungselement 5 in dem ersten Rastabschnitt 6 und dem zweiten Rastabschnitt 7 Rastausnehmungen 17 auf, die der rotativen Ausrichtung des Ansatzbauteils 3 in Bezug auf den Anschlusskörper 2 dienen. Durch die Mehrzahl aus Rastausnehmungen 17 können verschiedene Positionen eingestellt werden.

Bei dem Ausführungsbeispiel gemäß Fig. 3 ist die Sollbruchstelle 12a mit ihrer Eingriffsnut 13 und dem Nutkragen 14 versetzt angeordnet, bei diesem Ausführungsbeispiel nämlich in Richtung der Stirnfläche 11 versetzt angeordnet, so dass ein Auftrennen stets - gemäß Fig. 3 - unterhalb des Ausgleichselementes 9 erfolgt. Dadurch ist gewährleistet, dass das zumindest teilweise aufgetrennte Verbindungselement 5 zum größten Teil an dem Ansatzbauteil 3 verbleibt. Das ist insbesondere dann vorteilhaft, wenn das Ansatzbauteil 3 (siehe Fig. 1) lediglich zur einmaligen Verwendung vorgesehen ist und beispielsweise das aufgetrennte Verbindungselement 5 mit dem Ansatzbauteil 3 entsorgt werden soll.

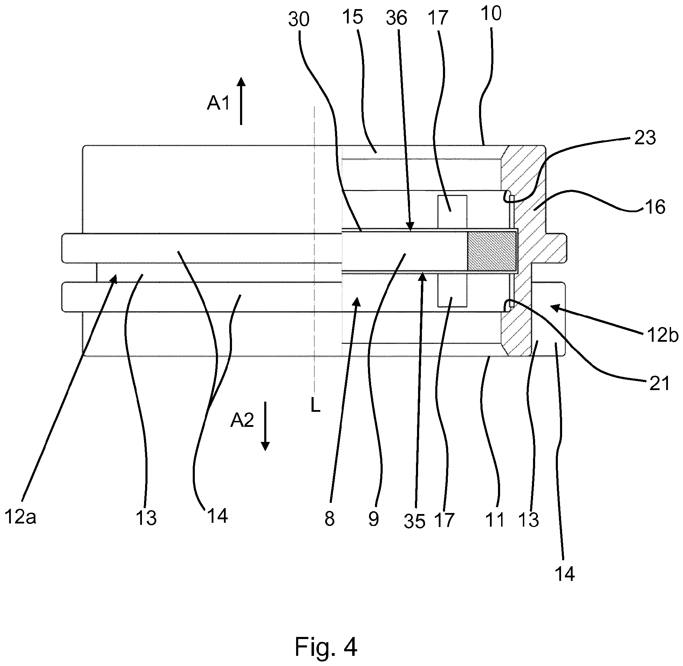

Fig. 4 zeigt ein Ausführungsbeispiel, das ähnlich wie das Ausführungsbeispiel gemäß Fig. 3 ausgestaltet ist. Der Unterschied ist, dass das Ausgleichselement 9 einen rechteckigen Querschnitt aufweist. Die erste Anlagefläche 35 und die zweite Anlagefläche 36 verlaufen jeweils in einer Ebene, deren Normale die Längsachse L des Verbindungselements 5 ist. Das Ausgleichselement 9 ist ebenfalls in einer Rastausnehmung 30 formschlüssig gehalten. Auch hier besteht das Ausgleichselement 9 aus einem anderen Material als der Grundkörper 16 des Verbindungselementes 5, nämlich einem Material, das einen kleineren Elastizitätsmodul aufweist.

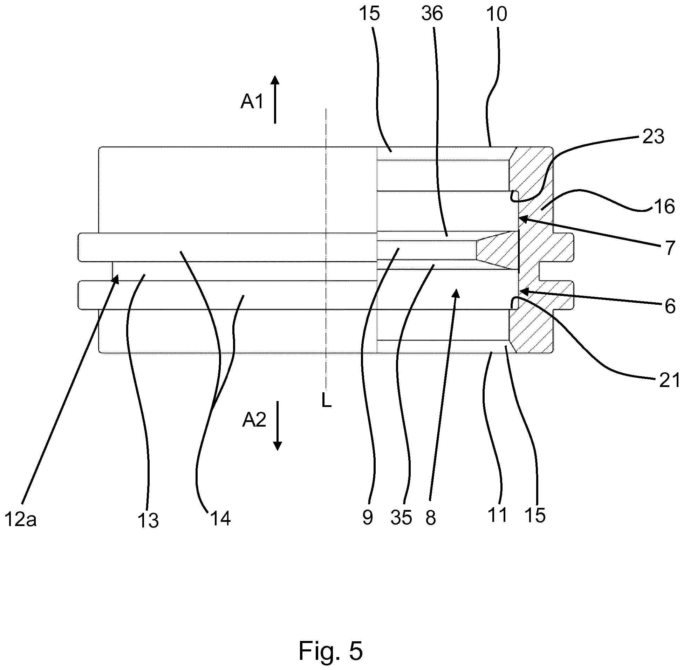

Fig. 5 zeigt ein Ausführungsbeispiel des Verbindungselementes 5, bei dem ebenfalls die Sollbruchstelle 12a versetzt angeordnet ist. Dieses Ausführungsbeispiel eines Verbindungselementes 5 weist lediglich eine Sollbruchstelle 12a zum axialen Auftrennen auf. Das Ausgleichselement 9 ist an den Grundkörper 16 angespritzt und besteht aus einem anderen Material als der Grundkörper 16. Die erste Anlagefläche 35 und die zweite Anlagefläche 36 sind im Querschnitt in Richtung der Längsachse L aufeinander zu geneigt. Beispielsweise ist der Grundkörper 16 des Verbindungselements 5 aus Polyoxymethylen (POM) und das Ausgleichselement 9 aus einem thermoplastischen Elastomer (TPE) hergestellt.

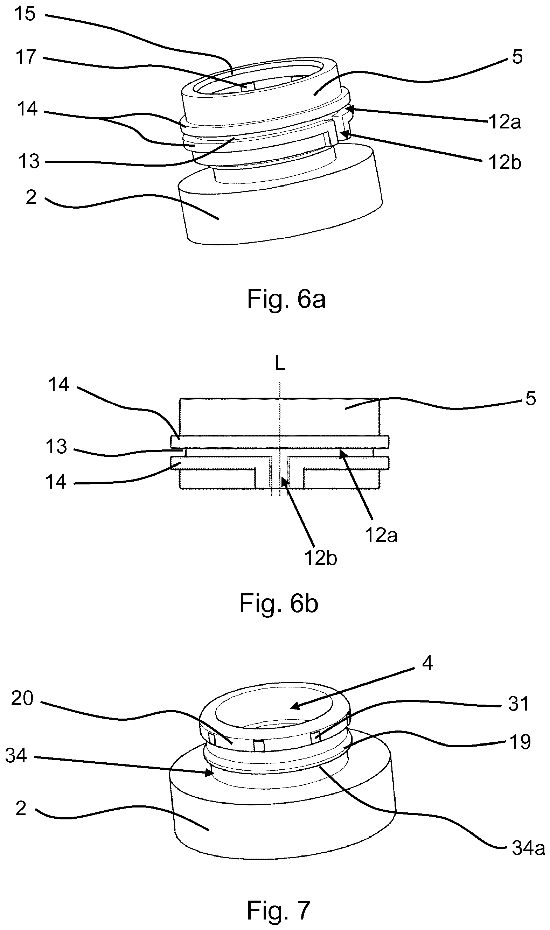

Fig. 6a zeigt ein Ausführungsbeispiel eines Verbindungselementes 5 in perspektivischer Ansicht, das auf einen zumindest teilweise dargestellten Anschlusskörper 2 aufgebracht ist. Deutlich zu erkennen ist die Ausgestaltung der axialen Sollbruchstelle 12a und der radialen Sollbruchstelle 12b, nämlich dass die Sollbruchstelle 12a in die Sollbruchstelle 12b in einem T-förmigen Bereich übergeht. Ebenfalls ineinander über gehen die Eingriffsnuten 13 sowie die Nutkragen 14. Die radiale Sollbruchstelle 12b mit ihrer Eingriffsnut 13 ist so ausgebildet, dass sie sich bis zur Eingriffsnut 13 der axialen Sollbruchstelle 12a erstreckt und damit ein radiales Auftrennen lediglich an dem Anschlusskörper 2 ermöglicht ist.

Fig. 6b zeigt ein Ausführungsbeispiel eines Verbindungselements 5, das dem Ausführungsbeispiel gemäß der Fig. 6a entspricht. Die radiale Sollbruchstelle 12b geht in einem T-förmigen Bereich in die axiale Sollbruchstelle 12a bzw. deren Eingriffsnut 13 übergeht.

Fig. 7 zeigt teilweise ein Ausführungsbeispiel eines Anschlusskörpers 2 mit einer Aufnahmeöffnung 4. An dem ersten Ringkragen 20 sind Rastvorsprünge 31 angeordnet, die mit den Rastausnehmungen 17 in einem ersten Rastbereich 6 (siehe Fig. 3 und 4) zusammenwirken können und dadurch eine Ausrichtung des Ansatzbauteils 3 in Bezug auf den Anschlusskörper 2 ermöglichen. Die Anschlagfläche 19 dient der axialen Fixierung des montierten Verbindungselements 5 und entlastet dadurch das Ausgleichselement 9.

Fig. 8 zeigt ein Ausführungsbeispiel eines Verbindungselementes 5 gemäß der Fig. 2 zum Zeitpunkt der Montage. Das Verbindungselement 5 wird - nach erfolgter Vormontage - mit dem Montageadapter 29 auf den Anschlusskörper 2 aufgepresst. Dabei wird der Anschlusskörper 2 mit den Haltearmen 18 im Haltebereich 34 gehalten. Während des Aufpressens erfolgt ein elastisches Aufweiten des Verbindungselementes 5, um anschließend die formschlüssige, umfangsmäßig geschlossene Rastverbindung auszubilden.

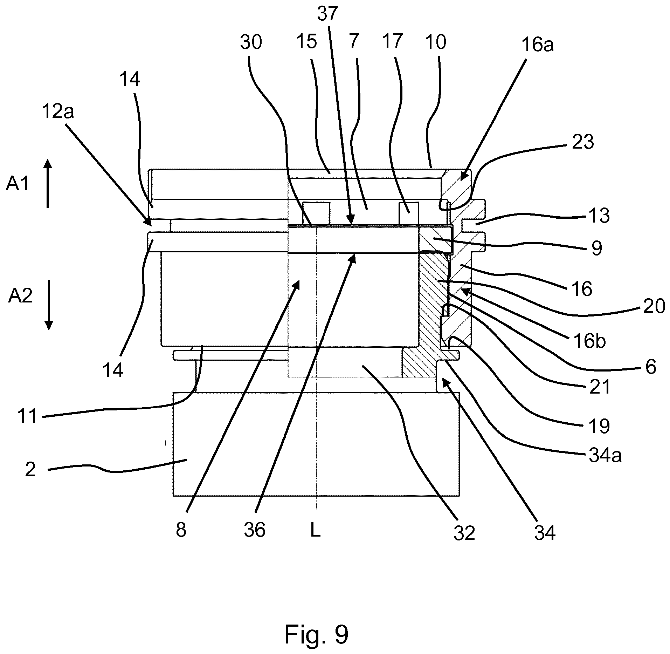

Fig. 9 zeigt ein Ausführungsbeispiel eines einseitig montierten Verbindungselements 5 in teilweise geschnittener Seitenansicht. Das Verbindungselement 5 ist einseitig auf einen Anschlusskörper 2 montiert und formschlüssig verrastet. Das Ausgleichselement 9 weist einen rechteckigen Querschnitt auf. Die erste Anlagefläche 35 liegt an dem Anschlusskörper 2 an. Eine weitere Bewegung des Verbindungselements 5 in Richtung des Anschlusskörpers 2 und damit eine Belastung des Ausgleichselements 9 wird durch die Anschlagfläche 19 verhindert. Das Ausgleichselement 9 ist bei diesem Ausführungsbeispiel axial versetzt angeordnet, nämlich in Richtung des - hier nicht gezeigten - Anschlussbauteils 3 (siehe Fig. 1). Der Grundkörper 16 des Ausgleichselements 9 weist dazu einen längeren Abschnitt 16b und einen kürzeren Abschnitt 16a auf. Der längere Abschnitt 16b ist auf das Anschlussbauteil 2 in der zweiten Aufpressrichtung A2 aufgepresst worden und formschlüssig verrastet, indem nämlich die erste Rastfläche 21 formschlüssig mit dem ersten Ringkragen 20 zusammenwirkt. Durch diese Ausgestaltung des Verbindungselements 5 ist eine bevorzugte Aufpressrichtung festgelegt, wodurch eine Montage des Verbindungselements 5 mit dem längeren Abschnitt 16b des Grundkörpers 16 lediglich auf dem Anschlusskörper 2 montierbar ist.

Auf dem Innenumfang 8 des Verbindungselements 5 sind im zweiten Rastabschnitt 7 Rastausnehmungen 17 ausgebildet, die eine rotative Festlegung des zu montierenden Anschlussbauteils 3 in Bezug auf das Verbindungselement 5 ermöglichen. Der erste Ringkragen 20 liegt mit einer Vorspannung in dem ersten Rastabschnitt 6 an. Die Anschlagfläche 19 ist bei diesem Ausführungsbeispiel orthogonal zur Längsachse L orientiert bzw. liegt in einer Ebene, deren Normale die Längsachse L ist. Auch die Haltefläche 34a ist bei diesem Ausführungsbeispiel orthogonal zur Längsachse L orientiert bzw. liegt in einer Ebene, deren Normale die Längsachse L ist.

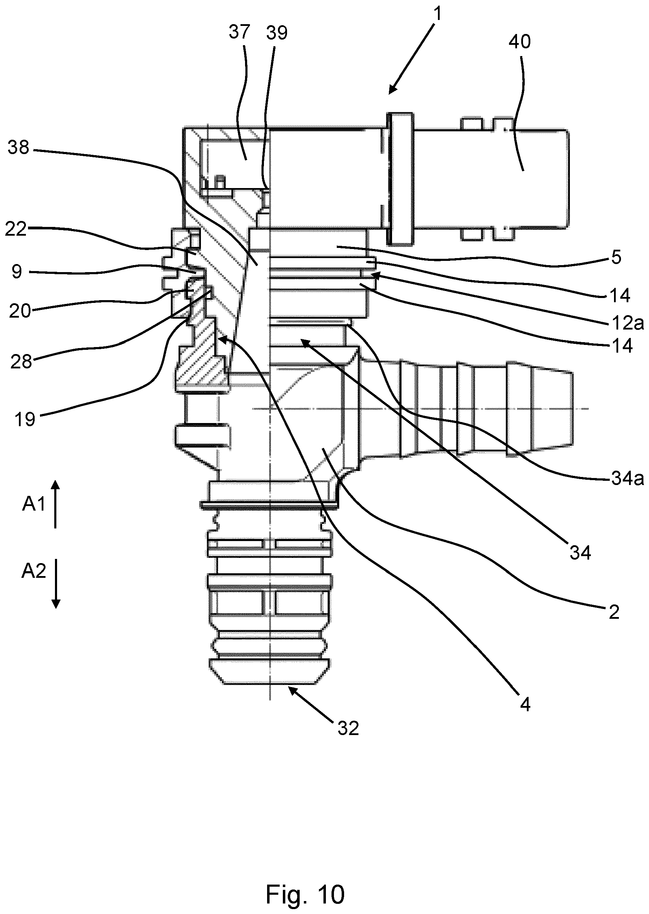

Fig. 10 zeigt ein Ausführungsbeispiel einer Steckverbinderanordnung 1 in teilweise geschnittener Ansicht. Mit dem Verbindungselement 5 ist eine formschlüssige Verbindung einerseits mit dem Anschlusskörper 2 und andererseits mit dem Ansatzbauteil 3 ausgebildet. Bei diesem Ausführungsbeispiel ist das Ausgleichselement 9 stoffschlüssig mit dem Verbindungselement 5 ausgebildet.

Das Ansatzbauteil 3 ist als Sensor ausgebildet und weist einen den Fluidkanal 32 und einen Sensorraum 37 verbindenden Sensorkanal 38 auf. Der Sensorkanal 38 ist bei diesem Ausführungsbeispiel mit einer Membran 39 verschlossen, so dass kein Fluid aus dem Fluidkanal 32 in den Sensorraum 37 eintreten kann. Das als Sensor ausgebildete Ansatzbauteil 3 weist zudem einen Anschlussabschnitt 40 für elektrische Versorgungs- und Signalleitungen auf.

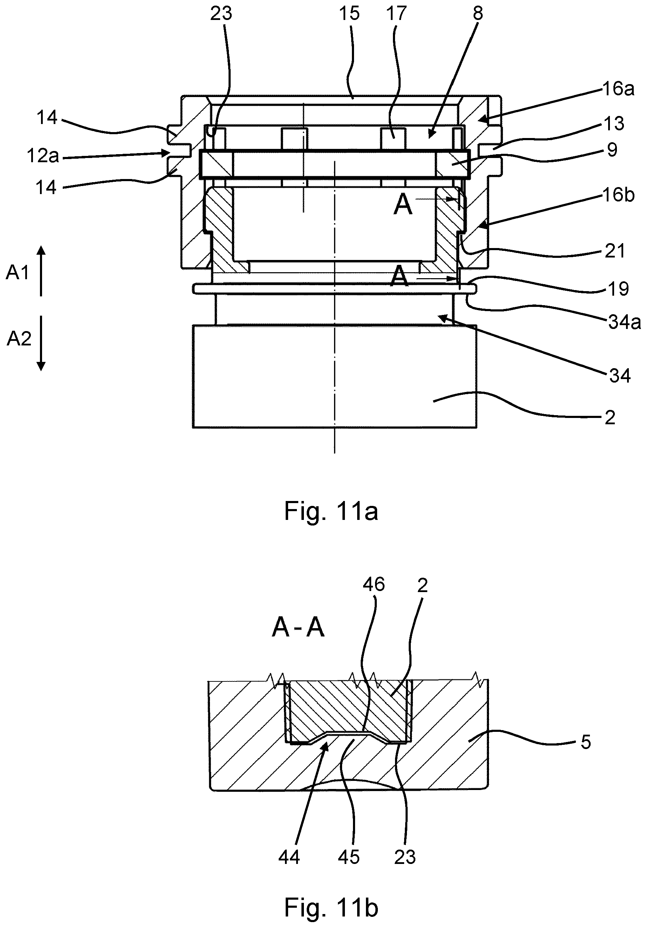

Fig. 11a zeigt ein Ausführungsbeispiel eines einseitig montierten Verbindungselements 5, wobei die Fig. 11b einen Schnitt entlang der Linie A-A gemäß der Fig. 11a zeigt. Bei diesem Ausführungsbeispiel weist die zweite Rastfläche 23 des Verbindungselements 5 ein Positioniermittel 44 auf, das bei diesem Ausführungsbeispiel als eine Mehrzahl trapezförmiger Erhebungen 45 ausgebildet ist, die gleichmäßig beabstandet über den Umfang verteilt sind. Die trapezförmigen Erhebungen 45 greifen im Montagezustand in trapezförmige Rücksprünge 46 am Ringkragen 20 des Anschlusskörpers 2 ein, so dass ein rotativer Formschluss zwischen dem Verbindungselement 5 und dem Anschlusskörper 2 zur Übertragung von Momenten um die Längsachse L ausgebildet wird. Die Rastfläche 23 und die trapezförmigen Erhebungen 45 sind - mit Ausnahme der schrägen Trapezflächen - orthogonal zur Längsachse L ausgerichtet. Durch die Mehrzahl der Erhebungen 45 kann der Drehwinkel in Schritten eingestellt werden, die dem Abstand der Erhebungen 45 auf dem Umfang entsprechen.

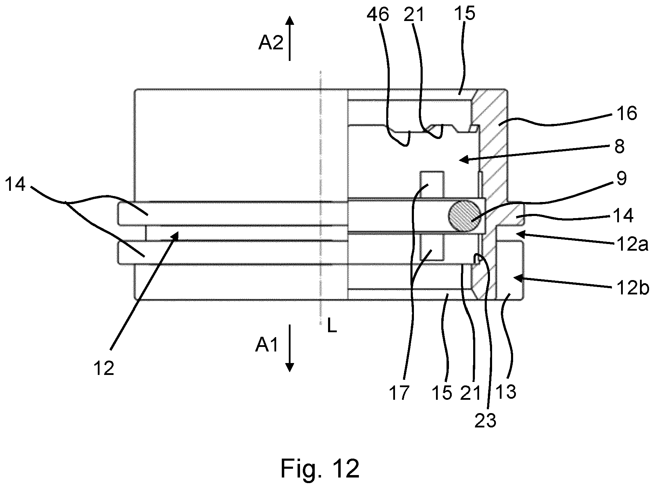

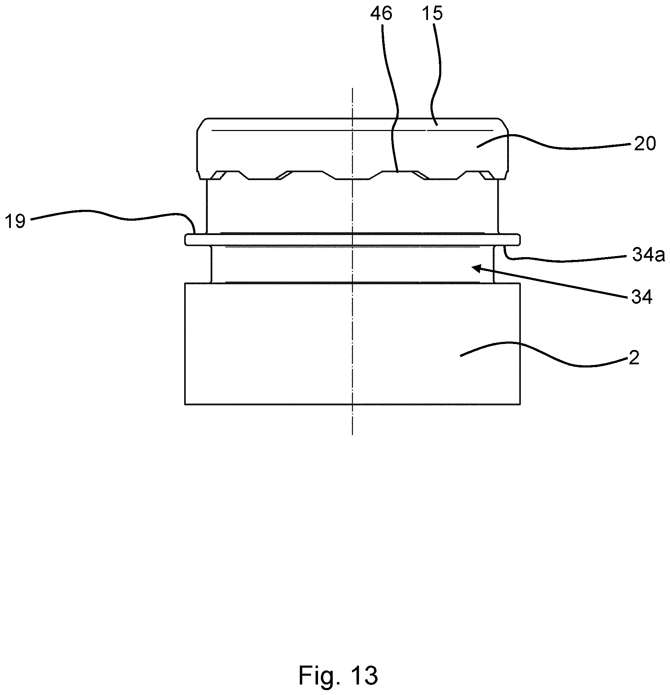

Fig. 12 zeigt ein Ausführungsbeispiel eines Verbindungselementes 5 in teilweise geschnittener Seitenansicht. Bei diesem Ausführungsbeispiel weist das Ausgleichselement 9 einen vollständig kreisförmigen Querschnitt auf. Ferner ist die erste Rastfläche 21 mit trapezförmigen Erhebungen 45 ausgebildet, so dass ein Zusammenwirken mit entsprechenden trapezförmigen Rücksprüngen 46 am Anschlusskörper 2 (siehe beispielsweise Fig. 13) und/oder am Ansatzbauteil 3 möglich ist. Zusätzlich sind bei diesem Ausführungsbeispiel Rastausnehmungen 17 vorgesehen, die ebenfalls eine Rotation verhindern.

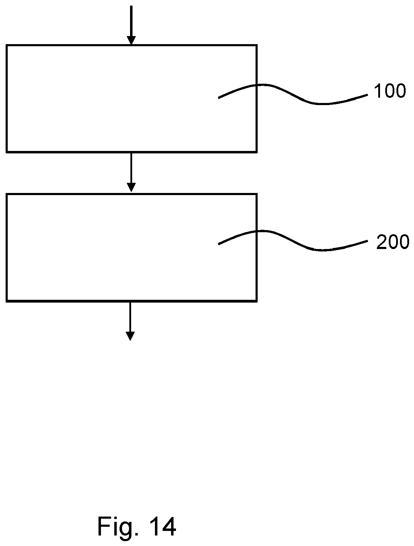

Fig. 13 zeigt ein Ausführungsbeispiel eines Anschlusskörpers 2 gemäß dem Ausführungsbeispiel der Fig. 11a, bei dem am Ringkragen 20 die trapezförmigen Rücksprünge 46 zur Aufnahme der trapezförmigen Erhebungen 45 eines Verbindungselementes 5 gemäß Fig. 11a bzw. gemäß Fig. 12 aufnehmbar sind. Die trapezförmigen Rücksprünge 46 sind mit Ausnahme der gewinkelten Trapezflächen, wie die Anlagefläche für die Rastfläche 23 am Verbindungselement 5, orthogonal zur Längsachse ausgerichtet Fig. 14 zeigt den schematischen Ablauf eines Verfahrens zur Verbindung eines Anschlusskörpers 2 und eines Ansatzbauteils 3 einer Medienleitung, bei dem zunächst ein Herstellen 100 einer ersten formschlüssigen, umfangsmäßig geschlossenen Rastverbindung zwischen einem Verbindungselement 5 und einem Ansatzbauteil 3 erfolgt, indem das Verbindungselement 5 unter elastischer Verformung zumindest teilweise auf das Ansatzbauteil 3, insbesondere einen zweiten Ringkragen 22, aufgepresst wird. Anschließend erfolgt ein Herstellen 200 einer zweiten formschlüssigen, umfangsmäßig geschlossenen Rastverbindung zwischen dem Verbindungselement 5 und dem Anschlusskörper 2, indem das Verbindungselement 5 unter elastischer Verformung zumindest teilweise auf den Anschlusskörper 2, insbesondere den ersten Ringkragen 20, aufgepresst wird, so dass das Ansatzbauteil 3 mittels des Verbindungselementes 5 mit dem Anschlusskörper 2 verbunden ist.

### Bezugszeichenliste

- 1: Steckverbinderanordnung
- 2: Anschlusskörper
- 3: Ansatzbauteil
- 4: Aufnahmeöffnung
- 5: Verbindungselement
- 6: Erster Rastabschnitt
- 7: Zweiter Rastabschnitt
- 8: Innenumfang des Verbindungselementes 5
- 9: Ausgleichselement
- 10: Stirnfläche in Richtung des Ansatzbauteils 3
- 11: Stirnfläche in Richtung des Anschlusskörpers 2
- 12a: Sollbruchstelle zum axialen Auftrennen
- 12b: Sollbruchstelle zum radialen Auftrennen
- 13: Eingriffsnut
- 14: Nutkragen
- 15: Einführschrägen
- 16: Grundkörper
- 16a: kürzerer Abschnitt des Grundkörpers 16
- 16b: längerer Abschnitt des Grundkörpers 16
- 17: Rastausnehmungen
- 18: Haltearme
- 19: Anschlagfläche
- 20: Erster Ringkragen
- 21: Erste Rastfläche
- 22: Zweiter Ringkragen
- 23: Zweite Rastfläche
- 24: Aufnahmegegenstück
- 25: Erster Absatz
- 26: Zweiter Absatz
- 27: Dritter Absatz
- 28: Dichtungsausnehmung
- 29: Montageadapter
- 30: Rastausnehmung
- 31: Rastvorsprünge
- 32: Fluidkanal
- 33: Fluidkanal
- 34: Haltebereich
- 34a: Haltefläche
- 35: Erste Anlagefläche
- 36: Zweite Anlagefläche
- 37: Sensorraum
- 38: Sensorkanal
- 39: Membran
- 40: Anschlussabschnitt
- 41: Erster Randbereich
- 42: Zweiter Randbereich
- 44: Positioniermittel
- 45: Trapezförmige Erhebung
- 46: Trapezförmiger Rücksprung

- 100: Herstellen der Rastverbindung zwischen 5 und 3
- 200: Herstellen der Rastverbindung zwischen 5 und 2

## Patentansprüche

1. Steckverbinderanordnung (1) für Medienleitungen, aufweisend mindestens einen Anschlusskörper (2) und mindestens ein Ansatzbauteil (3), wobei der Anschlusskörper (2) mindestens eine Aufnahmeöffnung (4) zur zumindest teilweisen Aufnahme des Ansatzbauteils (3) und einen Fluidkanal (32) aufweist, wobei das Ansatzbauteil (3) mit dem Fluidkanal (32) in Verbindung steht, wobei die Steckverbinderanordnung (1) mindestens ein Verbindungselement (5) umfasst, und wobei der Anschlusskörper (2) und das Ansatzbauteil (3) mittels des Verbindungselements (5) miteinander verbunden sind, wobei zwischen dem Verbindungselement (5) und dem Ansatzbauteil (3) eine erste formschlüssige Rastverbindung und zwischen dem Verbindungselement (5) und dem Anschlusskörper (2) eine zweite formschlüssige Rastverbindung ausgebildet ist,
**dadurch gekennzeichnet, dass**
die erste Rastverbindung umfangsmäßig geschlossen ausgebildet ist und dass die zweite Rastverbindung umfangsmäßig geschlossen ausgebildet ist.

2. Steckverbinderanordnung (1) nach Anspruch 1,
**dadurch gekennzeichnet, dass**
das Verbindungselement (5) einen ersten Rastabschnitt (6) und einen zweiten Rastabschnitt (7) aufweist, bevorzugt dass der erste Rastabschnitt (6) und/oder der zweite Rastabschnitt (7) als Rastrücksprung ausgebildet ist.

3. Steckverbinderanordnung (1) nach Anspruch 1 oder 2,
**dadurch gekennzeichnet, dass**
das Verbindungselement (5) ein elastisches Ausgleichselement (9) aufweist, und dass das Ausgleichselement (9) zwischen dem Anschlusskörper (2) und dem Ansatzbauteil (3) angeordnet ist, vorzugsweise dass das Ausgleichselement (9) einen kleineren Elastizitätsmodul als ein Grundkörper (16) des Verbindungselements (5) aufweist, insbesondere dass der Elastizitätsmodul des Grundkörpers (16) des Verbindungselements im Bereich zwischen 1 GPa und 10 GPa und der Elastizitätsmodul des Ausgleichselements (9) im Bereich zwischen 0,0004 GPa und 0,1 GPa liegt.

4. Steckverbinderanordnung (1) nach Anspruch 3,
**dadurch gekennzeichnet, dass**
das Ausgleichselement (9) in jeder Schnittebene, die eine Längsachse (L) des Verbindungselements beinhaltet, einen polygonalen, insbesondere trapezförmigen, kreisrunden oder ovalen Querschnitt aufweist, oder dass das Ausgleichselement (9) einen Querschnitt mit mindestens einem konkaven oder konvexen Bereich aufweist.

5. Steckverbinderanordnung (1) nach Anspruch 3 oder 4,
**dadurch gekennzeichnet, dass**
das Ausgleichselement (9) in axialer Richtung mittig angeordnet ist oder dass das Ausgleichselement (9) in axialer Richtung versetzt angeordnet ist.

6. Steckverbinderanordnung (1) nach einem der Ansprüche 1 bis 5,
**dadurch gekennzeichnet, dass**
das Verbindungselement (5) mindestens eine Sollbruchstelle (12a, 12b) zum irreversiblen radialen oder axialen Auftrennen aufweist, bevorzugt dass das Verbindungselement (5) mindestens zwei Sollbruchstellen (12a, 12b) aufweist, ferner bevorzugt dass die Sollbruchstelle (12a, 12b) mindestens eine Eingriffsnut (13) für ein Werkzeug auf dem Außenumfang des Verbindungselements (5) umfasst, insbesondere dass an der Eingriffsnut (13) mindestens ein Nutkragen (14) vorgesehen ist.

7. Steckverbinderanordnung (1) nach einem der Ansprüche 1 bis 6,
**dadurch gekennzeichnet, dass**
das Verbindungselement (5) auf seinem Innenumfang (8) mindestens eine Rastausnehmung (17) und/oder mindestens einen Rastvorsprung zum Festlegen eines Drehwinkels zwischen Verbindungselement (5) und Ansatzbauteil (3) und/oder zwischen Verbindungselement (5) und/oder Anschlusskörper (2) aufweist.

8. Steckverbinderanordnung (1) nach einem der Ansprüche 1 bis 7,
**dadurch gekennzeichnet, dass**
das Verbindungelement (5) mindestens eine erste Rastfläche (21) und mindestens eine zweite Rastfläche (23) aufweist, und dass an der ersten Rastfläche (21) und/oder an der zweiten Rastfläche (23) mindestens ein Positioniermittel (44) zum Festlegen eines Drehwinkels zwischen Verbindungselement (5) und Ansatzbauteil (3) und/oder zwischen Verbindungselement (5) und/oder Anschlusskörper (2) vorgesehen ist.

9. Steckverbinderanordnung (1) nach einem der Ansprüche 1 bis 8,
**dadurch gekennzeichnet, dass**
das Verbindungselement (5) mit einer radialen Vorspannkraft an dem Anschlusskörper (2) und/oder an dem Ansatzbauteil (3) gehalten ist, wobei die Vorspannkraft vorzugsweise an einem ersten Ringkragen (20) an dem Anschlusskörper (2) und/oder an einem zweiten Ringkragen (22) an dem Ansatzbauteil (3) anliegt.

10. Steckverbinderanordnung (1) nach einem der Ansprüche 1 bis 9,
**dadurch gekennzeichnet, dass**
der Anschlusskörper (2) einen Haltebereich (34) für radial zuführbare Haltearme (18) eines Montagewerkzeugs ausweist, insbesondere dass der Haltebereich (34) mindestens eine Haltefläche (34a) aufweist.

11. Verfahren zum Verbinden von Medienleitungen durch Herstellen einer Steckverbinderanordnung (1) nach einem der Ansprüche 1 bis 10, mit einem Anschlusskörper (2) und einem Ansatzbauteil (3), aufweisend die folgenden Verfahrensschritte:
- Herstellen (100) einer ersten formschlüssigen Rastverbindung zwischen einem Verbindungselement (5) und dem Ansatzbauteil (3), indem das Verbindungselement (5) in einer ersten Aufpressrichtung (A1) zumindest teilweise auf das Ansatzbauteil (3) aufgepresst wird,
- Herstellen (200) einer zweiten formschlüssigen Rastverbindung zwischen dem Verbindungselement (5) und dem Anschlusskörper (2), indem das Verbindungselement (5) in einer zweiten Aufpressrichtung (A2) zumindest teilweise auf den Anschlusskörper (2) aufgepresst wird, so dass das Ansatzbauteil (3) mittels des Verbindungselements (5) mit dem Anschlusskörper (3) verbunden ist.

12. Verfahren nach Anspruch 11, **dadurch gekennzeichnet, dass**
das Herstellen (100) der ersten formschlüssigen Rastverbindung und das Herstellen (200) der zweiten formschlüssigen Rastverbindung unter elastischer Verformung des Verbindungselements (5) erfolgen, insbesondere mit einer elastischen Verformung zwischen 6% und 7%, bevorzugt 6,7%.

13. Verfahren nach Anspruch 11 oder 12, **dadurch gekennzeichnet, dass**
zum Herstellen (100) der ersten formschlüssigen Rastverbindung und/oder zum Herstellen (200) der zweiten formschlüssigen Rastverbindung eine Presskraft unmittelbar auf das Verbindungselement (5), insbesondere auf eine Stirnfläche (10,11) des Verbindungselements (5), bewirkt wird.

14. Verfahren nach Anspruch 13, **dadurch gekennzeichnet, dass**
das Anschlussbauteil (2) beim Herstellen (200) der zweiten formschlüssigen Rastverbindung von zwei radial zugeführten Haltearmen (18) gehalten wird, und dass mit einem Montageadapter (29) eine Presskraft auf die Stirnfläche (10) des Verbindungselements (5) bewirkt wird.

## Claims

1. Plug-in connector arrangement (1) for media lines, having at least one connection body (2) and at least one attachment component (3), wherein the connection body (2) has at least one receiving opening (4) for at least partially receiving the attachment component (3) and has a fluid channel (32), wherein the attachment component (3) is connected to the fluid channel (32), wherein the plug-in connector arrangement (1) comprises at least one connecting element (5), and wherein the connection body (2) and the attachment component (3) are connected to one another by means of the connecting element (5), wherein a first form-fitting latching connection is formed between the connecting element (5) and the attachment component (3) and a second form-fitting latching connection is formed between the connecting element (5) and the connection body (2),
**characterized in that**
the first latching connection is of circumferentially closed form, and **in that** the second latching connection is of circumferentially closed form.

2. Plug-in connector arrangement (1) according to Claim 1,
**characterized in that**
the connecting element (5) has a first latching section (6) and a second latching section (7), preferably **in that** the first latching section (6) and/or the second latching section (7) are/is in the form of a latching setback.

3. Plug-in connector arrangement (1) according to Claim 1 or 2,
**characterized in that**
the connecting element (5) has an elastic compensating element (9), and **in that** the compensating element (9) is arranged between the connection body (2) and the attachment component (3), preferably **in that** compensating element (9) has a lower modulus of elasticity than a main body (16) of the connecting element (5), in particular **in that** the modulus of elasticity of the main body (16) of the connecting element lies in the range between 1 GPa and 10 GPa and the modulus of elasticity of the compensating element (9) lies in the range between 0.0004 GPa and 0.1 GPa.

4. Plug-in connector arrangement (1) according to Claim 3,
**characterized in that**
the compensating element (9) has a polygonal, in particular trapeziform, circular or oval cross section in any section plane containing a longitudinal axis (L) of the connecting element, or in that the compensating element (9) has a cross section with at least one concave or convex region.

5. Plug-in connector arrangement (1) according to Claim 3 or 4,
**characterized in that**
the compensating element (9) is arranged centrally in the axial direction, or **in that** the compensating element (9) is arranged in an offset manner in the axial direction.

6. Plug-in connector arrangement (1) according to one of Claims 1 to 5,
**characterized in that**
the connecting element (5) has at least one predetermined breaking point (12a, 12b) for irreversible radial or axial separation, preferably in that the connecting element (5) has at least two predetermined breaking points (12a, 12b), furthermore preferably **in that** the predetermined breaking point (12a, 12b) comprises at least one engagement groove (13) for a tool on the outer circumference of the connecting element (5), in particular **in that** at least one groove collar (14) is provided at the engagement groove (13).

7. Plug-in connector arrangement (1) according to one of Claims 1 to 6,
**characterized in that**
the connecting element (5) has on its inner circumference (8) at least one latching recess (17) and/or at least one latching projection for fixing an angle of rotation between connecting element (5) and attachment component (3) and/or between connecting element (5) and/or connection body (2).

8. Plug-in connector arrangement (1) according to one of Claims 1 to 7,
**characterized in that**
the connecting element (5) has at least one first latching surface (21) and at least one second latching surface (23), and **in that** provision is made on the first latching surface (21) and/or on the second latching surface (23) of at least one positioning means (44) for fixing an angle of rotation between connecting element (5) and attachment component (3) and/or between connecting element (5) and/or connection body (2).

9. Plug-in connector arrangement (1) according to one of Claims 1 to 8,
**characterized in that**
the connecting element (5) is held by way of a radial preload force on the connection body (2) and/or on the attachment component (3), wherein the preload force is preferably applied to a first annular collar (20) on the connection body (2) and/or to a second annular collar (22) on the attachment component (3).

10. Plug-in connector arrangement (1) according to one of Claims 1 to 9,
**characterized in that**
the connection body (2) has a holding region (34) for radially introducible holding arms (18) of a mounting tool, in particular **in that** the holding region (34) has at least one holding surface (34a).

11. Method for connecting media lines by production of a plug-in connector arrangement (1) according to one of Claims 1 to 10, which has a connection body (2) and an attachment component (3),
comprising the following method steps:
- producing (100) a first form-fitting latching connection between a connecting element (5) and the attachment component (3) in that the connecting element (5) is pressed at least partially onto the attachment component (3) in a first pressing-on direction (A1),
- producing (200) a second form-fitting latching connection between the connecting element (5) and the connection body (2) in that the connecting element (5) is pressed at least partially onto the connection body (2) in a second pressing-on direction (A2), with the result that the attachment component (3) is connected to the connection body (2) by means of the connecting element (5).

12. Method according to Claim 11,
**characterized in that**
producing (100) the first form-fitting latching connection and producing (200) the second form-fitting latching connection are realized with elastic deformation of the connecting element (5), in particular with an elastic deformation of between 6% and 7%, preferably of 6.7%.

13. Method according to Claim 11 or 12,
**characterized in that,**
for producing (100) the first form-fitting latching connection and/or for producing (200) the second form-fitting latching connection, a compressive force acting directly on the connecting element (5), in particular on a face surface (10, 11) of the connecting element (5), is effected.

14. Method according to Claim 13,
**characterized in that**
the connection component (2) is held by two radially introduced holding arms (18) when producing (200) the second form-fitting latching connection, and **in that**, using a mounting adaptor (29), a compressive force acting on the end surface (10) of the connecting element (5) is effected.

## Revendications

1. Agencement de connecteur enfichable (1) pour conduites de fluide, comprenant au moins un corps de raccordement (2) et au moins un composant rajouté (3), le corps de raccordement (2) comprenant au moins une ouverture de réception (4) pour la réception au moins partielle du composant rajouté (3) et un canal de fluide (32), le composant rajouté (3) étant relié au canal de fluide (32), l'agencement de connecteur enfichable (1) comprenant au moins un élément de liaison (5), et le corps de raccordement (2) et le composant rajouté (3) étant reliés l'un à l'autre au moyen de l'élément de liaison (5), une première liaison d'encliquetage par accouplement de forme étant formée entre l'élément de liaison (5) et le composant rajouté (3) et une deuxième liaison d'encliquetage par accouplement de forme étant formée entre l'élément de liaison (5) et le corps de raccordement (2),
**caractérisé en ce que**
la première liaison d'encliquetage est configurée sous forme fermée sur la circonférence et **en ce que** la deuxième liaison d'encliquetage est configurée sous forme fermée sur la circonférence.

2. Agencement de connecteur enfichable (1) selon la revendication 1,
**caractérisé en ce que**
l'élément de liaison (5) comprend une première section d'encliquetage (6) et une deuxième section d'encliquetage (7), de préférence **en ce que** la première section d'encliquetage (6) et/ou la deuxième section d'encliquetage (7) sont configurées sous la forme d'un retrait d'encliquetage.

3. Agencement de connecteur enfichable (1) selon la revendication 1 ou 2,
**caractérisé en ce que**
l'élément de liaison (5) comprend un élément de compensation élastique (9), et **en ce que** l'élément de compensation (9) est agencé entre le corps de raccordement (2) et le composant rajouté (3), de préférence **en ce que** l'élément de compensation (9) présente un module d'élasticité inférieur à un corps de base (16) de l'élément de liaison (5), notamment **en ce que** le module d'élasticité du corps de base (16) de l'élément de liaison se situe dans la plage comprise entre 1 GPa et 10 GPa et le module d'élasticité de l'élément de compensation (9) se situe dans la plage comprise entre 0,0004 GPa et 0,1 GPa.

4. Agencement de connecteur enfichable (1) selon la revendication 3,
**caractérisé en ce que**
l'élément de compensation (9) présente dans chaque plan de coupe, qui contient un axe longitudinal (L) de l'élément de liaison, une section transversale polygonale, notamment trapézoïdale, circulaire ou ovale, ou **en ce que** l'élément de compensation (9) présente une section transversale comprenant au moins une zone concave ou convexe.

5. Agencement de connecteur enfichable (1) selon la revendication 3 ou 4,
**caractérisé en ce que**
l'élément de compensation (9) est agencé au milieu dans la direction axiale ou **en ce que** l'élément de compensation (9) est agencé en décalage dans la direction axiale.

6. Agencement de connecteur enfichable (1) selon l'une quelconque des revendications 1 à 5,
**caractérisé en ce que**
l'élément de liaison (5) comprend au moins un emplacement de rupture privilégiée (12a, 12b) pour la séparation radiale ou axiale irréversible, de préférence **en ce que** l'élément de liaison (5) comprend au moins deux emplacements de rupture privilégiée (12a, 12b), en outre de préférence **en ce que** l'emplacement de rupture privilégiée (12a, 12b) comprend au moins une rainure d'engagement (13) pour un outil sur la circonférence extérieure de l'élément de liaison (5), notamment **en ce qu'**au moins un collet de rainure (14) est prévu sur la rainure d'engagement (13).

7. Agencement de connecteur enfichable (1) selon l'une quelconque des revendications 1 à 6,
**caractérisé en ce que**
l'élément de liaison (5) comprend sur sa circonférence intérieure (8) au moins un évidement d'encliquetage (17) et/ou au moins une protubérance d'encliquetage pour la fixation d'un angle de rotation entre l'élément de liaison (5) et le composant rajouté (3) et/ou entre l'élément de liaison (5) et/ou le corps de raccordement (2) .

8. Agencement de connecteur enfichable (1) selon l'une quelconque des revendications 1 à 7,
**caractérisé en ce que**
l'élément de liaison (5) comprend au moins une première surface d'encliquetage (21) et au moins une deuxième surface d'encliquetage (23), et **en ce qu'**au moins un moyen de positionnement (44) pour la fixation d'un angle de rotation entre l'élément de liaison (5) et le composant rajouté (3) et/ou entre l'élément de liaison (5) et/ou le corps de raccordement (2) est prévu sur la première surface d'encliquetage (21) et/ou sur la deuxième surface d'encliquetage (23).

9. Agencement de connecteur enfichable (1) selon l'une quelconque des revendications 1 à 8,
**caractérisé en ce que**
l'élément de liaison (5) est retenu sur le corps de raccordement (2) et/ou sur le composant rajouté (3) avec une force de précontrainte radiale, la force de précontrainte s'appliquant de préférence sur un premier collet annulaire (20) sur le corps de raccordement (2) et/ou sur un deuxième collet annulaire (22) sur le composant rajouté (3).

10. Agencement de connecteur enfichable (1) selon l'une quelconque des revendications 1 à 9,
**caractérisé en ce que**
le corps de raccordement (2) comprend une zone de retenue (34) pour des bras de retenus (18) acheminables radialement d'un outil de montage, notamment **en ce que** la zone de retenue (34) comprend au moins une surface de retenue (34a).

11. Procédé de liaison de conduites de fluide par production d'un agencement de connecteur enfichable (1) selon l'une quelconque des revendications 1 à 10, muni d'un corps de raccordement (2) et d'un composant rajouté (3), comprenant les étapes de procédé suivantes :
- la production (100) d'une première liaison d'encliquetage par accouplement de forme entre un élément de liaison (5) et le composant rajouté (3), en emmanchant par pression l'élément de liaison (5) au moins partiellement sur le composant rajouté (3) dans une première direction d'emmanchement par pression (A1),
- la production (200) d'une deuxième liaison d'encliquetage par accouplement de forme entre l'élément de liaison (5) et le corps de raccordement (2), en emmanchant par pression l'élément de liaison (5) au moins partiellement sur le corps de raccordement (2) dans une deuxième direction d'emmanchement par pression (A2), de telle sorte que le composant rajouté (3) est relié au corps de raccordement (2) au moyen de l'élément de liaison (5).

12. Procédé selon la revendication 11,
**caractérisé en ce que**
la production (100) de la première liaison d'encliquetage par accouplement de forme et la production (200) de la deuxième liaison d'encliquetage par accouplement de forme ont lieu avec déformation élastique de l'élément de liaison (5), notamment avec une déformation élastique comprise entre 6 % et 7 %, de préférence de 6,7 %.

13. Procédé selon la revendication 11 ou 12, **caractérisé en ce que**
pour la production (100) de la première liaison d'encliquetage par accouplement de forme et/ou pour la production (200) de la deuxième liaison d'encliquetage par accouplement de forme, une force de pression est exercée directement sur l'élément de liaison (5), notamment sur une surface frontale (10, 11) de l'élément de liaison (5).

14. Procédé selon la revendication 13,
**caractérisé en ce que**
le composant de raccordement (2) est retenu par deux bras de retenue (18) acheminés radialement lors de la production (200) de la deuxième liaison d'encliquetage par accouplement de forme, et **en ce qu'**une force de pression est exercée sur la surface frontale (10) de l'élément de liaison (5) avec un adaptateur de montage (29) .
